# EUROPÄISCHE PATENTANMELDUNG

(11) **EP 4 752 382 A2**
(43) Veröffentlichungstag der Anmeldung: **03.06.2026**
(21) Anmeldenummer: 25212487.0
(22) Anmeldetag: 30.10.2025
(51) Int. Cl.: F16B 5/02

(54) **AXIALE TOLERANZAUSGLEICHSANORDNUNG, EINE VERBINDUNG ZWISCHEN ZWEI BAUTEILEN DAMIT SOWIE EIN VERBINDUNGS- UND EIN HERSTELLUNGSVERFAHREN DAFÜR**

(30) Priorität: 06.11.2024 DE 102024132390
(71) Anmelder: Böllhoff Verbindungstechnik GmbH, 33649 Bielefeld (DE)
(72) Erfinder: LINDNER, Gunnar, 33106 Paderborn (DE)
(74) Vertreter: HWP Intellectual Property

(57) **Zusammenfassung**

Die vorliegende Erfindung offenbart eine axiale Toleranzausgleichsanordnung (1) zum selbsttätigen Ausgleich von Toleranzen zwischen einem ersten (A) und einem zweiten Bauteil (B), welche die folgenden Merkmale aufweist: ein Mutternelement (10), vorzugsweise ein ringförmiges Mutternelement (10), mit einer radial äußeren Befestigungsstruktur (12), insbesondere einer Bajonettstruktur, die in einer Bauteilöffnung (O1), insbesondere einer Schlüssellochgeometrie (90), des ersten Bauteils (A) befestigbar ist, und einem inneren Mutterngewinde (22) einer ersten Gangrichtung, eine Hohlschraube (40) mit einem Kopf (44) an einem ersten axialen Ende (62) der Hohlschraube (40) und einem hohlzylindrischen Schaft (42), der an einer radialen Außenseite ein Verstellgewinde (52) passend zum Mutterngewinde (22) und an einer radialen Innenseite ein Befestigungsgewinde (56) mit einer der ersten entgegengesetzten zweiten Gangrichtung aufweist, welches mit einer Befestigungsschraube (80) zweiter Gangrichtung zusammenwirkt, sodass das erste (A) und das zweite Bauteil (B) über die Toleranzausgleichsanordnung (1) aneinander befestigbar sind, wobei das Befestigungsgewinde (56), vorzugsweise benachbart zu einem zweiten axialen Ende (64) der Hohlschraube (40), ein Mitschleppmittel aufweist, so dass die Befestigungsschraube (80) mit der Hohlschraube (40) über das Mitschleppmittel durch eine lösbare Mitschleppverbindung verbindbar ist, wobei ein Mitschleppmoment vorzugsweise ≤ 0,2 Nm beträgt, besonders bevorzugt ≤ 0,1 Nm, so dass bei einem Drehen der Befestigungsschraube (80) die Hohlschraube (40) mitdrehbar und in Anlage mit dem zweiten Bauteil (B) bewegbar ist und die Befestigungsschraube (80) nach Überwindung des Mitschleppmoments und Lösen der Mitschleppverbindung weiter in die Hohlschraube (40) einschraubbar ist.

## Beschreibung

### 1. Gebiet der Erfindung

Die vorliegende Erfindung betrifft eine axiale Toleranzausgleichsanordnung zum selbsttätigen Ausgleich von axialen Toleranzen zwischen einem ersten und einem zweiten Bauteil, eine Verbindung zwischen diesen beiden Bauteilen mithilfe der axialen Toleranzausgleichsanordnung, ein entsprechendes Verbindungsverfahren sowie ein Herstellungsverfahren für die axiale Toleranzausgleichsanordnung.

### 2. Hintergrund der Erfindung

Im Stand der Technik sind verschiedene Toleranzausgleichsanordnungen bekannt, mit deren Hilfe zwei Bauteile in einem Abstand zueinander aneinander befestigbar sind. Diese Toleranzausgleichsanordnungen folgen unterschiedlichen technischen Prinzipien.

Um einen selbsttätigen axialen Toleranzausgleich zwischen zwei Bauteilen bei deren Verbindung zu realisieren, schlägt der Stand der Technik Toleranzausgleichsanordnungen vor, in denen Gewindepaarungen unterschiedlicher Gangrichtung und ein Mitschlepper miteinander kombiniert werden. Diese sind beispielsweise in EP 2 049 807 B1, DE 10 2020 216 324 A1, EP 1 780 424 A1 beschrieben. Gerade die Integration einer Mitschlepperanordnung in zwei ineinandergreifende Gewindehülsen mit unterschiedlichen Gewindepaarungen erhöht den Herstellungsaufwand derartiger axialer Toleranzausgleichsanordnungen. Denn häufig besteht der Mitschlepper aus einem anderen Material als die miteinander zu verbindenden Gewindehülsen. Nichtsdestotrotz haben diese Anordnungen den Vorteil, dass sie sich ohne zusätzlichen Installationsaufwand in den Verbindungsprozess integrieren lassen, da beim Befestigen der zueinander beabstandeten Bauteile die Toleranzausgleichsanordnung selbsttätig und nachfolgend mechanisch belastbar den Abstand zwischen den beiden Bauteilen stützend ausgleicht.

Aus DE 10 2007 037 242 A1 ist eine Befestigungseinrichtung zum Befestigen eines ersten Bauteils an einem zweiten Bauteil mit selbsttätigem Ausgleich von Toleranzen im Abstand zwischen den beiden Bauteilen bekannt. Die Einrichtung umfasst eine Basiseinheit, die aus einer am ersten Bauteil festlegbaren Blindnietmutter, einer Verstellgewindemutter und einem hülsenförmigen Käfig besteht, welcher die Verstellgewindemutter aufnimmt und mit der Blindnietmutter verbindet, einer Verstelleinheit, die aus einer Gewindehülse, einer Anlageplatte und einer Mitnehmerbuchse besteht, welche die Gewindehülse und die Anlageplatte verbindet, wobei die Gewindehülse der Verstelleinheit in die Verstellgewindemutter der Basiseinheit über eine erste Gewindepaarung einer ersten Gangrichtung einschraubbar ist, und einer Befestigungsschraube, die über eine zweite Gewindepaarung einer entgegengesetzten zweiten Gangrichtung in die am Bauteil festgelegte Blindnietmutter einschraubbar ist und mit der Mitnehmerbuchse eine lösbare Mitschleppverbindung bildet, um beim Drehen der Befestigungsschraube die Verstelleinheit mitzudrehen und dadurch die Anlageplatte zwecks Toleranzausgleich in Anlage mit dem zweiten Bauteil zu bewegen.

Ein Nachteil dieser Anordnungen ist, dass aufgrund des erforderlichen Mitschleppers als eigenes Bauteil der Aufbau der Toleranzausgleichsanordnungen insgesamt komplex und der Herstellungsaufwand erhöht ist.

Daher schlägt DE 10 2020 216 324 A1 im Rahmen einer Ausführungsform vor, den Mitschlepper benachbart zu dem Anlageabschnitt in das Innengewinde des Ausgleichselements zu integrieren. Die Integration kann durch das Bereitstellen einer Beschichtung des Innengewindes, durch ein sich nach unten verjüngendes Gewinde, durch Deformationen des Innengewindes und/oder durch Fehlstellen im Innengewinde erfolgen.

Schließlich ist aus EP 2 980 421 A1 ein Einstellelement zum Ausgleich eines Spalts zwischen einem Träger und einem am Träger zu befestigenden Teil bekannt, bestehend aus einem Hohlkörper, der mit einem Außengewinde einer ersten Steigungsrichtung versehen ist. Der Hohlkörper weist ein Innengewinde mit einer zweiten Steigungsrichtung entgegengesetzt zur ersten auf, wobei das Innengewinde mindestens zwei Gewindegänge umfasst und davon ist mindestens ein Gewindegang verformt, um ein größeres Reibungsmoment als dasjenige bereitzustellen, das von den anderen Gewindegängen des Innengewindes bereitgestellt wird. Mit verformtem Gewinde ist dabei ein Gewinde gemeint, das mindestens einen Teil umfasst, der verformt wurde, um näher an ein benachbartes Gewinde herangeführt zu werden. Das heißt, der Abstand zwischen dem verformten Gewinde und dem benachbarten Gewinde ist geringer als die Steigung des Innengewindes.

Durch die Annäherung des verformten Gewindes an das benachbarte Gewinde entsteht ein Reibungsdrehmoment, das größer ist als dasjenige, das von den anderen unverformten Gewindegängen des Innengewindes bereitgestellt wird.

Ein Nachteil dieser Anordnungen mit integrierter Mitschleppfunktion ist, dass das Drehmoment zur Überwindung der integrierten Mitschleppfunktion häufig größer ist als bei bekannten Anordnungen mit separatem Mitschlepper, so dass ein weiteres Einschrauben einer Befestigungsschraube nach dem erfolgten Toleranzausgleich zumindest anfänglich unnötig erschwert ist. Zudem ist die Befestigung der Toleranzausgleichsanordnung im ersten Bauteil bei den oben diskutieren Anordnungen zeitaufwendig und komplex.

Es ist daher die Aufgabe vorliegender Erfindung, eine Toleranzausgleichsanordnung bereitzustellen, die die obigen Nachteile überwindet und in dieser Hinsicht optimiert ist. Ebenso sollen eine entsprechende Verbindung sowie ein Verbindungsverfahren und ein Herstellungsverfahren bereitgestellt werden.

### 3. Zusammenfassung der Erfindung

Die obige Aufgabe wird durch eine Toleranzausgleichsanordnung gemäß dem unabhängigen Patentanspruch 1, durch eine Verbindung zwischen einem ersten und einem zweiten Bauteil mit der Toleranzausgleichsanordnung gemäß dem unabhängigen Patentanspruch 10, durch ein Verbindungsverfahren von zwei Bauteilen mit dieser Toleranzausgleichsanordnung gemäß dem unabhängigen Patentanspruch 12 und durch ein Herstellungsverfahren der oben genannten Toleranzausgleichsanordnung gemäß dem Patentanspruch 13 gelöst. Vorteilhafte Ausgestaltungen und Weiterentwicklungen vorliegender Erfindung gehen aus der folgenden Beschreibung, den begleitenden Zeichnungen und den anhängenden Patentansprüchen hervor.

Die vorliegende Erfindung offenbart eine axiale Toleranzausgleichsanordnung zum selbsttätigen Ausgleich von Toleranzen zwischen einem ersten und einem zweiten Bauteil, welche die folgenden Merkmale aufweist: ein Mutternelement, vorzugsweise ein ringförmiges Mutternelement, mit einer radial äußeren Befestigungsstruktur, insbesondere einer Bajonettstruktur, die in einer Bauteilöffnung, insbesondere einer Schlüssellochgeometrie, des ersten Bauteils befestigbar ist, und einem inneren Mutterngewinde einer ersten Gangrichtung, eine Hohlschraube mit einem Kopf an einem ersten axialen Ende der Hohlschraube und einem hohlzylindrischen Schaft, der an einer radialen Außenseite ein Verstellgewinde passend zum Mutterngewinde und an einer radialen Innenseite ein Befestigungsgewinde mit einer der ersten entgegengesetzten zweiten Gangrichtung aufweist, welches mit einer Befestigungsschraube zweiter Gangrichtung zusammenwirkt, sodass das erste und das zweite Bauteil über die Toleranzausgleichsanordnung aneinander befestigbar sind, wobei das Befestigungsgewinde, vorzugsweise benachbart zu einem zweiten axialen Ende der Hohlschraube, ein Mitschleppmittel aufweist, so dass die Befestigungsschraube mit der Hohlschraube über das Mitschleppmittel durch eine lösbare Mitschleppverbindung verbindbar ist, wobei ein Mitschleppmoment vorzugsweise ≤ 0,2 Nm beträgt, besonders bevorzugt ≤ 0,1 Nm, so dass bei einem Drehen der Befestigungsschraube die Hohlschraube mitdrehbar und in Anlage mit dem zweiten Bauteil bewegbar ist und die Befestigungsschraube nach Überwindung des Mitschleppmoments und Lösen der Mitschleppverbindung weiter in die Hohlschraube einschraubbar ist.

Vorliegende Erfindung liefert eine axiale Toleranzausgleichsanordnung, die auf der Grundlage von zwei Gewindepaarungen unterschiedlicher Gangrichtung einen selbsttätigen Toleranzausgleich bei der Installation zwischen zwei voneinander beabstandeten Bauteilen bereitstellt. Um das Herstellen dieser Verbindung zwischen den beiden Bauteilen bereits zu Beginn des Installationsvorgangs zu vereinfachen und damit zu beschleunigen, wird das Mutternelement zur Aufnahme der toleranzausgleichenden Hohlschraube in einer Schlüssellochgeometrie oder in einem Schlüsselloch des ersten Bauteils verankert. Auf diese Weise wird mithilfe des Mutternelements und dem in Kombination damit verwendeten Bajonettverschluss zum ersten Bauteil bzw. der in Kombination damit verwendeten Bajonettverbindung zum ersten Bauteil eine belastbare Gewindebasis geschaffen, um das zweite Bauteil in einem bestimmten Abstand daran befestigen zu können. Denn dieser meist nur eine Vierteldrehung beanspruchende Befestigungsvorgang des Mutternelements mit Bajonettstruktur ist einfacher als beispielsweise die Nutzung einer Blindnietmutter oder einer Schweißmutter in Herstellung und Anwendung, um eine Verbindung zwischen zwei Bauteilen herstellen zu können.

In einer alternativ bevorzugten Ausgestaltung wird die radial äußere Befestigungsstruktur des Mutternelements durch ein Außengewinde bereitgestellt. In diesem Zusammenhang ist es besonders bevorzugt, dass es sich um ein gewindeformendes oder gewindefurchendes Außengewinde handelt. Denn auf diese Weise ist eine verlässliche Verbindung insbesondere mit einem ersten Bauteil aus einem Kunststoffmaterial herstellbar. Im Vergleich zu der oben diskutierten Bajonettstruktur, die eine Verankerung des Mutternelements in einem dünnwandigen Bauteil ermöglicht, benötigt das Mutternelement mit dem Außengewinde als radial äußere Befestigungsstruktur ein im Vergleich dickwandigeres Bauteil oder um die Bauteilöffnung herum muss eine Auskragung vorhanden sein. Beide Alternativen stellen sicher, dass eine ausreichende Fläche für den Eingriff mit dem Außengewinde an der Bauteilöffnung des ersten Bauteils vorhanden ist.

Im Rahmen einer weiteren alternativen Ausgestaltung wird die radial äußere Befestigungsstruktur durch eine Raststruktur mit radial federnden Rastnasen gebildet. Vorzugsweise umfasst das Mutternelement in dieser Ausgestaltung mindestens einen axial verlaufenden starren Steg an der radialen Außenseite, um ein Drehen des Mutternelements in dem ersten Bauteil bei Verwendung zu verhindern. Der mindestens eine starre Steg wirkt dazu mit einer entsprechenden Aussparung in der Bauteilöffnung des ersten Bauteils zusammen. Besonders vorteilhaft ist in diesem Zusammenhang eine in umfänglicher Richtung wechselweise Anordnung von Rastnasen und starren Stegen. Beispielsweise können zwei Rastnasen und zwei starre Stege jeweils gegenüberliegend voneinander angeordnet werden, während zwischen einer Rastnase und dem benachbarten starren Steg ein Winkel von 90° eingeschlossen ist. Eine derartig ausgestaltetes Mutternelement kann, wie die oben diskutierte Bajonettverbindung, in einer Schlüssellochgeometrie oder in einem Schlüsselloch des ersten Bauteils verankert werden. Dementsprechend handelt es sich vorzugsweise um ein dünnwandiges erstes Bauteil.

Sofern sich die Bauteilöffnung des ersten Bauteils an einem Rand des ersten Bauteils befindet, beispielsweise in Form einer U-förmigen Aussparung, kann die radial äußere Befestigungsstruktur des Mutternelements mittels seitlicher Rastnasen bereitgestellt werden. Hierzu weist das Mutternelement einen komplementär zur U-förmigen Aussparung geformten U-förmigen Körper auf, wobei an den radialen Außenseiten des jeweiligen Schenkels der U-Form eine Rastnase vorgesehen ist, die mit einer entsprechenden Aussparung in der Bauteilöffnung im ersten Bauteil zusammenwirkt. Das Einsetzen des Mutternelements in die Bauteilöffnung erfolgt in diesem Fall nicht in axialer Richtung, sondern vielmehr von der Seite. Analog zu den Erläuterungen bezüglich des Außengewindes als Befestigungsstruktur muss im Fall eines dünnwandigen Bauteils eine Auskragung an der Bauteilöffnung vorgesehen sein, damit das Mutternelement sicher befestigbar ist.

Abschließend kann das Mutternelements in Ergänzung zu der radial äußeren Befestigungsstruktur jeder Ausgestaltung einen Flansch mit einer sich in axialer Richtung davon erstreckenden und umfänglich verlaufenden Dichtlippe aufweisen. Bei Verwendung liegt die Dichtlippe auf einer Oberfläche des ersten Bauteils um die Bauteilöffnung herum auf und verhindert ein Eindringen von Medien durch die Bauteilöffnung. Um zusätzlich sicherzustellen, dass kein Medium durch die Bauteilöffnung und insbesondere durch die Hohlschraube von der einen Bauteilseite zu der anderen Bauteilseite gelangen kann, ist das Mutternelement vorzugsweise einseitig geschlossen ausgebildet.

Die verschiedenen Ausgestaltungsmöglichkeiten der radial äußeren Befestigungsstruktur werden später unter Bezugnahme auf die detaillierten Ausführungsformen verdeutlicht. Dies gilt ebenfalls für die Ausgestaltung mit Flansch und Dichtlippe.

Zum Ausgleich des zwischen den beiden Bauteilen existierenden Abstands ist eine Hohlschraube in dem Mutternelement angeordnet, bevorzugt vorinstalliert. Das Befestigungsgewinde der Hohlschraube weist das Mitschleppmittel auf. Somit handelt es sich um ein in die Hohlschraube integriertes Mitschleppmittel. Ein separater Mitschlepper bzw. ein eigenständiges Mitschleppelement wie es aus dem Stand der Technik bekannt ist, liegt daher nicht vor.

Das Mitschleppmittel ist vorteilhafterweise benachbart zum zweiten axialen Ende der Hohlschraube angeordnet. Da das erste axiale Ende der Hohlschraube den Kopf aufweist, liegt das Mitschleppmittel entfernt vom Kopf vor. Bei Verwendung der Toleranzausgleichsanordnung wird die Befestigungsschraube vom ersten axialen Ende her in das Befestigungsgewinde eingeschraubt. Somit gelangt die Befestigungsschraube erst gegen Ende des Einschraubvorgangs in das Befestigungsgewinde der Hohlschraube mit dem Mitschleppmittel in Eingriff.

Wie oben ausgeführt ist das Mitschleppmittel in das Befestigungsgewinde integriert, liegt also im Bereich des Befestigungsgewindes vor. Dies ist insbesondere bei Ausgestaltungen wichtig, die am zweiten axialen Ende der Hohlschraube einen größeren Innendurchmesser im Vergleich zum Bereich mit dem Befestigungsgewinde aufweisen. In solchen Fällen bezieht sich die Formulierung benachbart zum zweiten axialen Ende auf den Bereich mit dem Befestigungsgewinde. Dies wird später bei der Erläuterung der bevorzugten Ausführungsformen sowie im Rahmen der detaillierten Beschreibung verdeutlicht.

Das Mitschleppmittel stellt ein Mitschleppmoment bereit. Dieses ist vorzugsweise so dimensioniert, dass es größer ist als ein Losdrehmoment zwischen Verstellgewinde und Mutterngewinde. Im Vergleich zum Stand der Technik mit einem integrierten Mitschleppelement führt das durch das Mitschleppmittel bereitgestellte Mitschleppmoment jedoch nicht zu einem übermäßigen Kraftanstieg, um die Mitschleppverbindung zu lösen und die Befestigungsschraube weiter in die Hohlschraube einzudrehen. Dies wird besonders durch die bevorzugte Größenordnung des Mitschleppmoments verdeutlicht, die ≤ 0,2 Nm beträgt, vorzugweise ≤ 0,1 Nm.

Die Vorteile der erfindungsgemäßen Toleranzausgleichsanordnung sind somit, dass sie aufgrund des Mutternelements einfach und schnell im ersten Bauteil befestigt werden kann. Ein separater Mitschlepper ist zudem nicht erforderlich, was die Komplexität der Toleranzausgleichsanordnung verringert. Zudem ist das Mitschleppmoment so dimensioniert, dass kein wesentlich erhöhter Kraftaufwand zum Lösen der Mitschleppverbindung erforderlich ist, was die Verwendung weiter vereinfacht.

In einer bevorzugten Ausführungsform der Toleranzausgleichsanordnung ist das Mitschleppmittel benachbart zum zweiten axialen Ende der Hohlschraube, insbesondere in einem Bereich ≤ 360° des Verlaufs des Befestigungsgewindes beginnend am oder benachbart zum zweiten axialen Ende, dadurch bereitgestellt ist, dass sich eine Tiefe des Befestigungsgewindes verringert, und/oder das Befestigungsgewinde zumindest teilweise unterbrochen ausgebildet ist und/oder die radiale Innenseite der Hohlschraube benachbart zum zweiten axialen Ende umfänglich und in axialer Richtung teilweise oder vollständig eben ausgebildet ist.

Wie oben angedeutet berücksichtigt die Formulierung benachbart zum zweiten axialen Ende insbesondere Ausgestaltungen, bei denen die Hohlschraube mindestens zwei Bereiche mit jeweils unterschiedlichem Innendurchmesser aufweist. Ein erster Bereich benachbart zum Kopf und somit zum ersten axialen Ende weist beispielsweise einen ersten Innendurchmesser sowie das Befestigungsgewinde auf. Benachbart zum zweiten axialen Ende der Hohlschraube ist ein zweiter Bereich mit einem größeren zweiten Innendurchmesser vorgesehen. Dieser kann daher nicht das Befestigungsgewinde definieren und bleibt bei der Betrachtung der Mitschleppfunktion unberücksichtigt.

Aus diesem Grund bezieht sich auch die Formulierung, dass das Mitschleppmittel in einem Bereich ≤ 360° des Verlaufs des Befestigungsgewindes beginnend am oder benachbart zum zweiten axialen Ende vorliegt ausschließlich auf den Bereich mit Befestigungsgewinde, d.h. ausgehend von dem obigen Beispiel auf den ersten Bereich, also den Befestigungsbereich. Hierdurch soll verdeutlicht werden, dass das Mitschleppmittel in Einschraubrichtung der Befestigungsschraube am Ende des Befestigungsgewindes vorliegt.

Zudem ergibt sich über das Merkmal des Verlaufs von ≤ 360° des Befestigungsgewindes in Abhängigkeit von der Gewindesteigung die maximale axiale Erstreckung des Abschnitts, in dem das Mitschleppmittel vorliegt. Wenn beispielsweise eine Gewindesteigung von 1,75 mm vorliegt, dann beträgt die axiale Erstreckung des Abschnitts, in dem das Mitschleppmittel vorliegt, entsprechend maximal 1,75 mm.

Die unterschiedlichen bevorzugten Ausgestaltungen des Mitschleppmittels realisieren alle eine effektive Mitschleppverbindung zwischen Hohlschraube und Befestigungsschraube. Mit den unterschiedlichen Ausgestaltungen kann jedoch das Mitschleppmoment insbesondere auf die verwendeten Materialen abgestimmt werden.

Die Ausgestaltung, bei der die radiale Innenseite umfänglich und in axialer Richtung teilweise oder vollständig eben ausgebildet ist, bezieht sich, ausgehend von dem obigen Beispiel, auf den ersten Bereich, d.h. den Bereich mit dem Befestigungsgewinde. Ein möglicherweise vorhandener zweiter Bereich mit einem größeren Innendurchmesser wird hierdurch nicht charakterisiert. Denn mit dieser Ausgestaltung soll verdeutlicht werden, dass das Befestigungsgewinde nicht bis zum Ende des Befestigungsbereichs ausgeformt wurde. Vielmehr muss die Befestigungsschraube einen Teil des Befestigungsgewindes selbst furchen oder schneiden, bevor ein vorderes, d.h. kopfabgewandtes, Ende der Befestigungsschraube den Bereich mit dem Befestigungsgewinde verlässt.

Gemäß einem Beispiel schließen sich an den Bereich mit ausgeformtem Befestigungsgewinde axiale Stege an. Beispielsweise sind drei axiale Stege vorgesehen, die umfänglich gleichmäßig voneinander beabstandet sind.

Zwischen den axialen Stegen springt die Wand im Befestigungsbereich radial zurück. Mit anderen Worten stehen die axialen Stege in radialer Richtung von der Wand im Befestigungsbereich vor. Der Vorsprung ist in radialer Richtung dabei so bemessen, dass die Befestigungsschraube mit den axialen Stegen in Eingriff gelangt. Da die axialen Stege jedoch eben ausgebildet sind, muss die Befestigungsschraube in die axialen Stege ein Gewinde einbringen. Bezugnehmend auf die obige Formulierung ist die radiale Innenseite bei dieser Ausgestaltung umfänglich und in axialer Richtung teilweise eben ausgebildet.

Vorzugsweise haben die axialen Stege eine im Querschnitt trapezförmige Ausgestaltung. Dabei ist die längere Grundseite der Trapezform radial außen anordnet, während die kürzere Grundseite radial innen angeordnet ist und den Bereich bereitstellt, mit dem die Befestigungsschraube bei Verwendung in Eingriff gelangt.

Insbesondere die so ausgebildeten axialen Stege stellen einerseits das Mitschleppmittel zum automatischen Mitschleppen der Hohlschraube bereit. Erst nach Überwindung des Mitschleppmoments bringt die Befestigungsschraube in die axialen Stege ein Gewinde ein. Darüber hinaus können die axialen Stege auch als weiteres Antriebsmittel für eine manuelle Verstellung der Hohlschraube dienen. Eine Anpassung des Mitschleppmoments ist über die Variation der Anzahl der Stege und/oder ihre Erstreckung in Umfangsrichtung möglich. Auch dies wird später unter Bezugnahme auf die detaillierte Beschreibung weiter erläutert.

In einer vorteilhaften Ausführungsform der Toleranzausgleichsanordnung weist diese weiterhin eine Transportsicherung auf, so dass während eines Transports der Toleranzausgleichsanordnung ein unbeabsichtigtes Ausschrauben der Hohlschraube aus dem Mutternelement verhindert ist. Vorzugsweise stellt die Transportsicherung dabei zusätzlich eine erste Verkontersicherung zwischen der Hohlschraube und dem Mutternelement bereit. Besonders vorteilhaft weist das Mutternelement dazu eine in axialer Richtung vorstehende Nase auf, die in Verbindung mit einer Transportsicherungskontur an einer radialen Außenseite einer schaftzugewandten Anlagefläche an dem Kopf der Hohlschraube die Transportsicherung bildet. In dieser Hinsicht ist es bevorzugt, dass die Transportsicherungskontur in radialer Richtung in einem ersten Umfangsteilbereich nicht über den Kopf hervorsteht, in einem zweiten Umfangsteilbereich nicht über einen die Kopfform umhüllenden Kreis hervorsteht und in einem dritten Umfangsteilbereich über den umhüllenden Kreis hervorsteht.

Gerade durch die Kombination der in axialer Richtung vorstehenden Nase mit der Transportsicherungskontur an der Hohlschraube ist neben der Transportsicherung, d.h. der Sicherung gegen ein unbeabsichtigtes Herausschrauben der Hohlschraube aus dem Mutternelement, auch ein Verkontern zwischen Hohlschraube und Mutternelement verhindert. Dies ist in der Breite der Nase, d.h. ihrer Erstreckung in umfänglicher Richtung, und der daraus resultierenden Anlagefläche an der Transportsicherungskontur begründet. Denn im eingeschraubten Zustand der Hohlschraube in das Mutternelement liegt die Nase vorzugsweise an der Transportsicherungskontur an, ist jedoch bevorzugt nicht in radialer Richtung ausgelenkt.

In radialer Richtung ausgelenkt bezeichnet dabei den Zustand, in dem die Nase im Vergleich zu ihrem anfänglichen Zustand aufgrund der Transportsicherungskontur weiter radial nach außen gedrückt wird. Ausgangspunkt hierbei ist, dass der erste, der zweite und der dritte Umfangsteilbereich in umfänglicher Richtung hintereinander angeordnet sind. Beispielsweise ist die Nase im eingeschraubten Zustand der Hohlschraube in radialer Richtung benachbart zur Transportsicherungskontur angeordnet oder liegt an dieser an. Dies kann beispielsweise im zweiten Umfangsteilbereich der Transportsicherungskontur oder in einem Übergangsbereich zwischen zweitem und drittem Umfangsteilbereich sein, in Abhängigkeit von der Positionierung der Nase in radialer Richtung. Vorzugsweise ist die Nase in diesem Zustand nicht radial ausgelenkt, d.h. die Transportsicherungskontur drückt die Nase nicht radial nach außen.

Wird nun die Hohlschraube aus dem Mutternelement geschraubt, gelangt die Nase mit dem dritten Umfangsteilbereich in Eingriff. Hierdurch wird die Nase radial nach außen ausgelenkt oder gedrückt, wodurch das Herausschrauben der Hohlschraube erschwert ist. Im weiteren Verlauf des Herausschraubens kommt die Nase in den Bereich des ersten Umfangsteilbereichs. Dieser ist jedoch so dimensioniert, dass er die Nase nicht mehr radial nach außen drückt. Somit kann die Nase in ihren ursprünglichen Zustand zurückkehren. Ein weiteres Ausschrauben der Hohlschraube führt aufgrund der Gewindesteigung und der dazu passenden Dimensionierung der Nase in axialer Richtung nicht mehr zu einem Eingriff zwischen Nase und Transportsicherungskontur. Dementsprechend ist die Erstreckung der Nase in axialer Richtung vorzugsweise so gewählt, dass spätestens nach einer vollen Umdrehung der Hohlschraube die Transportsicherungskontur nicht mehr mit der Nase in Eingriff gelangen kann.

In einer weiteren bevorzugten Ausführungsform der Toleranzausgleichsanordnung mit Transportsicherungskontur ist eine zweite Verkontersicherung zwischen Hohlschraube und Mutternelement bereitgestellt. Vorzugsweise ist die zweite Verkontersicherung dadurch gebildet, dass das Verstellgewinde benachbart zum ersten axialen Ende der Hohlschraube nicht stetig ausläuft und/oder das Mutterngewinde des Mutternelements benachbart zu einem ersten axialen Ende des Mutternelements nicht stetig ausläuft. Dabei stellt die zweite Verkontersicherung vorzugsweise ein Widerstandsmoment bereit, welches vorzugsweise größer als das Mitschleppmoment ist. Mittels der zweiten Verkontersicherung wird somit eine zusätzliche Sicherung gegen Verkontern bereitgestellt.

Gemäß einer weiteren bevorzugten Ausführungsform der Toleranzausgleichsanordnung bestehen das ringförmige Mutternelement und die Hohlschraube aus Kunststoff und weisen vorzugsweise einen Glasfaseranteil im Bereich von 25% bis 65%, vorzugsweise 45% bis 55% und bevorzugt 50% auf.

Für eine kostengünstige Gestaltung der axialen Toleranzausgleichsanordnung wird diese bevorzugt aus Kunststoff in einem ebenfalls bevorzugten Spritzgussverfahren hergestellt. Bekannte Kunststoffe, beispielsweise thermoplastische Kunststoffe, sind mechanisch ausreichend belastbar, dass sie als Toleranzausgleichsanordnung dienen können. Der Grad der mechanischen Belastung lässt sich zudem noch steigern, indem die thermoplastischen Kunststoffe mit einem Glasfaseranteil versetzt werden. Auf diese Weise können Produktions- und Vertriebskosten gesenkt werden. Denn die Herstellung der Toleranzausgleichsanordnung aus Kunststoff fällt günstiger aus als beispielsweise eine Toleranzausgleichsanordnung aus Metall oder aus einer Kombination aus Kunststoff und Metall. Zudem ist das Gewicht einer Toleranzausgleichsanordnung aus Kunststoff geringer als beispielsweise die gleiche Konstruktion aus Metall. Dies wirkt sich auf spätere Transport- bzw. Lieferkosten aber auch auf das Gewicht der finalen Verbindung der zwei Bauteile unter Verwendung der axialen Toleranzausgleichsanordnung aus.

Im Hinblick auf die Toleranzausgleichsanordnung ist es weiterhin vorteilhaft, wenn diese einen Demontageschutz aufweist, wie er in der ebenfalls heute eingereichten deutschen Patentanmeldung DE 10 2024 132 374.4 beschrieben ist.

Vorliegende Erfindung offenbart zudem eine Verbindung eines ersten Bauteils und eines dazu beabstandeten zweiten Bauteils mit der Toleranzausgleichsanordnung gemäß mindestens einer der oben beschriebenen Ausgestaltungen und einer Befestigungsschraube.

Gemäß einer weiteren bevorzugten Ausgestaltung der Verbindung weist das erste Bauteil eine Schlüssellochgeometrie auf, in der das Mutternelement angeordnet ist.

Vorliegende Erfindung offenbart zudem ein Verbindungsverfahren eines ersten Bauteils mit einer Schlüssellochgeometrie mit einem dazu beabstandeten zweiten Bauteil mit einer Bauteilöffnung mit einer Toleranzausgleichsanordnung gemäß einer der oben beschriebenen Ausgestaltungen oder einer Kombination davon, das die folgenden Schritte aufweist: Befestigen des ringförmigen Mutternelement mit der darin vormontierten Hohlschraube in der Schlüssellochgeometrie des ersten Bauteils, Anordnen der Bauteilöffnung des zweiten Bauteils gegenüber dem Befestigungsgewinde der Hohlschraube und Einschraubens einer Befestigungsschraube, die sich durch die Bauteilöffnung erstreckt, in das Befestigungsgewinde, Drehen der Befestigungsschraube und dadurch Mitdrehen der Hohlschraube, bis diese an dem zweiten Bauteil anliegt und Festziehen der Befestigungsschraube im Befestigungsgewinde, wenn sich der Kopf der Hohlschraube am zweiten Bauteil abstützt.

Zudem umfasst vorliegende Erfindung ein Herstellungsverfahren der Toleranzausgleichsanordnung gemäß einer der obigen Ausgestaltungen, das die folgenden Schritte aufweist: Bereitstellen einer Spritzgussform für das Mutternelement und für die Hohlschraube, Spritzgießen des Mutternelements und der Hohlschraube, Entformen des Mutternelements und der Hohlschraube, Vorinstallieren der Hohlschraube in dem Mutternelement.

### 4. Kurzzusammenfassung der Zeichnungen

Nachfolgend wird die vorliegende Erfindung unter Bezugnahme auf die Zeichnungen detailliert beschrieben. Gleiche Bezugszeichen in den Zeichnungen bezeichnen dabei gleiche Bauteile und/oder Elemente. Es zeigen:
- Figur 1: eine perspektivische Explosionsdarstellung einer bevorzugten Ausgestaltung der erfindungsgemäßen Toleranzausgleichsanordnung,
- Figur 2: eine perspektivische Ansicht der Hohlschraube gemäß Fig. 1,
- Figur 3: eine Schnittansicht der Hohlschraube gemäß Fig. 1,
- Figur 4: eine Draufsicht auf die Hohlschraube gemäß Fig. 1,
- Figur 5: eine perspektivische Ansicht des Mutternelements gemäß Fig. 1,
- Figur 6: eine perspektivische Ansicht der Toleranzausgleichsanordnung gemäß Fig. 1 in einem vorinstallierten Zustand,
- Figur 7: eine Schnittansicht der Toleranzausgleichsanordnung gemäß Fig. 6,
- Figur 8: eine perspektivische Ansicht eines ersten Bauteils mit einer Schlüssellochgeometrie zur Aufnahme und Befestigung des Mutternelements,
- Figur 9: eine perspektivische Ansicht des ersten Bauteils gemäß Fig. 8 mit darin befestigten Toleranzausgleichsanordnung gemäß Fig. 1,
- Figur 10: eine perspektivische Ansicht des ersten Bauteils mit Toleranzausgleichsanordnung gemäß Fig. 9 in Verbindung mit einem zweiten Bauteil und einer Befestigungsschraube,
- Figur 11: eine Seitenansicht der Verbindung zwischen zwei Bauteilen mittels der Toleranzausgleichsanordnung und der Befestigungsschraube,
- Figur 12: eine Schnittansicht der Darstellung aus Fig. 11,
- Figur 13a: eine Draufsicht auf eine Toleranzausgleichsanordnung gemäß Fig. 1 mit der Hohlschraube in einem vollständig eingeschraubten Zustand,
- Figur 13b: eine perspektivische Ansicht des Zustands gemäß Fig. 13a,
- Figur 14a: eine Draufsicht auf eine Toleranzausgleichsanordnung gemäß Fig. 1 mit der Hohlschraube in einem anfänglichen ausgeschraubten Zustand,
- Figur 14b: eine perspektivische Ansicht des Zustands gemäß Fig. 14a,
- Figur 15a: eine Draufsicht auf eine Toleranzausgleichsanordnung gemäß Fig. 1 mit der Hohlschraube in einem weiter ausgeschraubten Zustand,
- Figur 15b: eine perspektivische Ansicht des Zustands gemäß Fig. 15a,
- Figur 16a: eine Draufsicht auf eine Toleranzausgleichsanordnung gemäß Fig. 1 mit der Hohlschraube in einem noch weiter ausgeschraubten Zustand,
- Figur 16b: eine perspektivische Ansicht des Zustands gemäß Fig. 16a,
- Figur 17: eine perspektivische Ansicht einer Toleranzausgleichsanordnung mit Demontageschutz,
- Figur 18: eine vergrößerte Ansicht des zweiten axialen Endes der Hohlschraube aus Figur 17,
- Figur 19: ein Flussdiagramm einer bevorzugten Ausführungsform eines Verbindungsverfahrens unter Verwendung der axialen Toleranzausgleichsanordnung,
- Figur 20: ein Flussdiagramm einer bevorzugten Ausführungsform eines Herstellungsverfahrens der erfindungsgemäßen axialen Toleranzausgleichsanordnung
- Figur 21: eine perspektivische Ansicht einer alternativen Ausgestaltung der Hohlschraube,
- Figur 22: eine Schnittansicht einer Ausführungsform einer erfindungsgemäßen Toleranzausgleichsanordnung mit der Hohlschraube gemäß Figur 21,
- Figur 23: eine perspektivische Explosionsdarstellung einer weiteren bevorzugten Ausgestaltung der erfindungsgemäßen Toleranzausgleichsanordnung mit erstem Bauteil,
- Figur 24: eine Schnittansicht der Ausführungsform der erfindungsgemäßen Toleranzausgleichsanordnung gemäß Figur 23,
- Figur 25: eine perspektivische Explosionsdarstellung einer weiteren bevorzugten Ausgestaltung der erfindungsgemäßen Toleranzausgleichsanordnung mit erstem Bauteil,
- Figur 26: eine Schnittansicht der Ausführungsform der erfindungsgemäßen Toleranzausgleichsanordnung gemäß Figur 25,
- Figur 27: eine perspektivische Explosionsdarstellung einer weiteren bevorzugten Ausgestaltung der erfindungsgemäßen Toleranzausgleichsanordnung mit erstem Bauteil,
- Figur 28: eine Schnittansicht der Ausführungsform der erfindungsgemäßen Toleranzausgleichsanordnung gemäß Figur 27,
- Figur 29: eine perspektivische Explosionsdarstellung einer weiteren bevorzugten Ausgestaltung der erfindungsgemäßen Toleranzausgleichsanordnung mit erstem Bauteil,
- Figur 30: eine perspektivische Ansicht der Ausführungsform der erfindungsgemäßen Toleranzausgleichsanordnung gemäß Figur 29 bei Verwendung im ersten Bauteil und
- Figur 31: eine Schnittansicht der Ausführungsform der erfindungsgemäßen Toleranzausgleichsanordnung gemäß Figur 30.

### 5. Detaillierte Beschreibung der bevorzugten Ausführungsformen

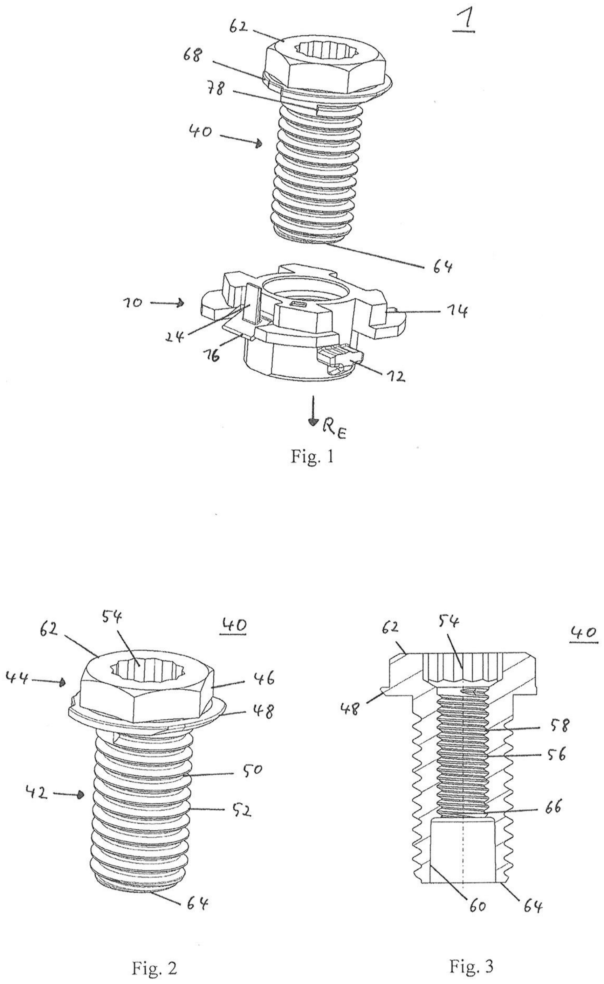

Zunächst unter Bezugnahme auf die Figuren 1 bis 7 wird der Aufbau einer Ausführungsform einer erfindungsgemäßen axialen Toleranzausgleichsanordnung 1 erläutert. Figur 1 zeigt hierbei eine Explosionsdarstellung der axialen Toleranzausgleichsanordnung 1 bestehend aus einem Mutternelement 10 und einer Hohlschraube 40. Zur Befestigung eines ersten A und eines zweiten Bauteils B aneinander unter Verwendung der Toleranzausgleichsanordnung 1 wird eine Befestigungsschraube 80 mit einer unter dem Kopf der Befestigungsschraube 80 angeordneten Scheibe 86 verwendet.

Das Mutternelement 10 und die Hohlschraube 40 sind vorzugsweise mithilfe eines Spritzgussverfahrens aus Kunststoff hergestellt. Die Befestigungsschraube 80, wie auch die Scheibe 86, bestehen bevorzugt aus Metall. Um eine mechanische Belastbarkeit der Kunststoffteile der axialen Toleranzausgleichsanordnung 1 zu steigern, wird der im Spritzguss verarbeitete Kunststoff bevorzugt mit einem Glasfaseranteil von 25 % bis 65 %, vorzugsweise von 45 % bis 55 % und weiter bevorzugt von 50 % versetzt.

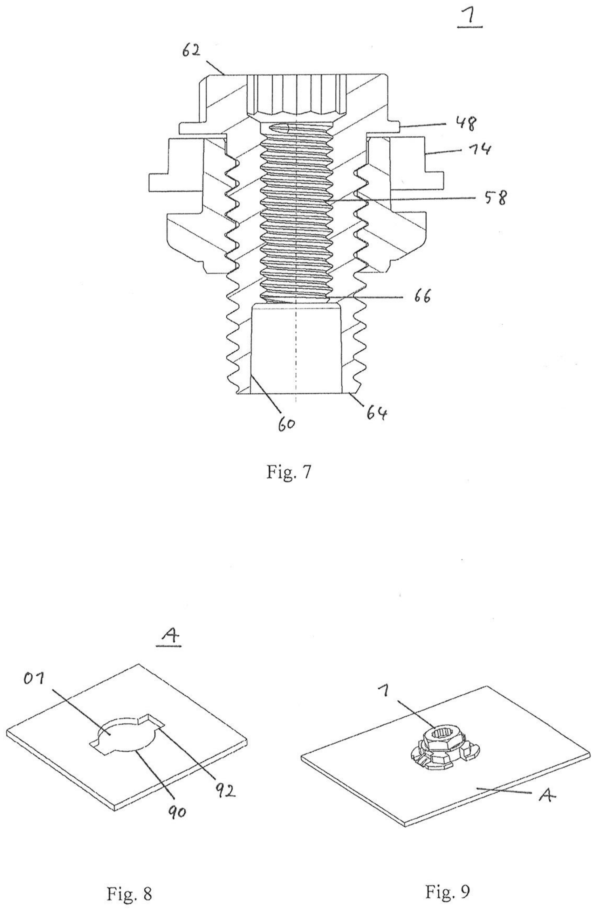

Vorzugsweise ist das Mutternelement 10 ringförmig ausgebildet, um es in einer passenden Bauteilöffnung O1 eines ersten Bauteils A befestigen zu können. Gemäß der gezeigten bevorzugten Ausgestaltung in Figur 1 hat das Mutternelement 10 eine unten näher erläuterte Bajonettstruktur, mit der sie in einer Schlüssellochgeometrie 90 des ersten Bauteils A befestigbar ist. Die Schlüssellochgeometrie 90 hat dazu in bekannter Weise mindestens zwei Ausschnitte 92, die umfänglich gleichmäßig verteilt angeordnet sind. Die Ausschnitte 92 sind derart an das Mutternelement 10 angepasst, dass zwei sich radial vom Mutternelement 10 nach außen erstreckende Bajonettstege 12 durch die Ausschnitte 92 durchgesteckt werden können, um dann durch Drehen das Mutternelement 10 am ersten Bauteil A verriegeln zu können. Im befestigten Zustand wird das erste Bauteil A zwischen den Bajonettstegen 12 und einer Unterseite eines axial zu den Bajonettstegen 12 beabstandeten Haltekragens 14 des Mutternelements 10 reibschlüssig gehalten. Das erste Bauteil A mit der Bauteilöffnung O1, die eine Schlüssellochgeometrie 90 mit den Ausschnitten 92 hat, ist in Figur 8 gezeigt. Figur 9 zeigt das erste Bauteil A mit der darin befestigten axialen Toleranzausgleichsanordnung 1.

Vorzugsweise um 90° versetzt zu den zwei Bajonettstegen 12 ist mindestens ein Raststeg 16, vorzugsweise zwei Raststege 16 bei zwei Bajonettstegen 12, angeordnet. Die Raststege 16 sind vorzugsweise in einer Einsetzrichtung R_{E} des Mutternelements 10 geneigt angeordnet. Wird das Mutternelement 10 in die Schlüssellochgeometrie 90 eingesteckt, durchgreifen die Bajonettstege 12 die Ausschnitte 92. Gleichzeitig stützen sich die Raststege 16 an der Oberfläche des ersten Bauteils A zwischen den Ausschnitten 92 ab und erzeugen eine bevorzugte Federvorspannung auf das Mutternelement 10 entgegen der Einsetzrichtung R_{E}.

Sobald das Mutternelement 10 um seine Längsachse gedreht worden ist, verriegeln sich die Bajonettstege 12 an einer dem Haltekragen 14 abgewandten Seite des ersten Bauteils A. Während die Bajonettstege 12 zum Befestigen des Mutternelements 10 im Schlüsselloch 90 aus den Ausschnitten 92 herausgedreht werden, werden die Raststege 16 bevorzugt in die Ausschnitte 92 hineingedreht. Aufgrund der bevorzugten geneigten Anordnung der Raststege 16 rasten diese in die Ausschnitte 92 ein und verhindern dadurch ein zukünftiges Drehen des Mutternelements 10 um seine Längsachse.

Zum Drehen des Mutternelements 10 ist der Haltekragen 14 an mindestens zwei Stellen bevorzugt durchbrochen, um einen Eingriff 15 für ein drehendes Werkzeug bereitzustellen.

Vorzugsweise ist das Mutternelement 10 in Kombination mit den Bajonett- 12 und Raststegen 16 ringförmig ausgebildet.

Gemäß einer weiteren bevorzugten Ausführungsform des Mutternelements 10 (nicht gezeigt) weist es an einer radialen Außenseite anstelle der Bajonett- 12 und Raststege 16 ein Außengewinde auf, um in einer Gewindeöffnung des ersten Bauteils A befestigt werden zu können.

Damit wird das ringförmige Mutternelement 10 so weit in eine Gewindeöffnung des ersten Bauteils A eingeschraubt, bis sich der Haltekragen 14 an der Bauteiloberfläche des ersten Bauteils A abstützt. Somit bildet das Außengewinde in Kombination mit dem Haltekragen 14 eine reibschlüssige Verdrehsicherung. Diese Verdrehsicherung wird in der Ausführungsform von Figur 1 durch die Kombination von Bajonett- 12 und Raststegen 16 als formschlüssige Verdrehsicherung bereitgestellt.

Gemäß einer weiteren nicht gezeigten bevorzugten Ausführungsform des Mutternelements 10 ist dieses in Umfangsrichtung dreieckig oder polygonal geformt, um in eine Bauteilöffnung im ersten Bauteil A komplementärer Form eingesetzt zu werden. Die eckige Form des Mutternelements 10 sorgt innerhalb der Bauteilöffnung O1 für eine Verdrehsicherung des Mutternelements 10 relativ zum ersten Bauteil A.

Um das eckige Mutternelement 10 in der Bauteilöffnung O1 zu halten, ist in Richtung der axialen Einsetzrichtung R_{E} unterhalb des Haltekragens 14 eine Raststruktur (nicht gezeigt) vorgesehen. Die bevorzugte Raststruktur verrastet das Mutternelement 10 bevorzugt reibschlüssig und formschlüssig in der Bauteilöffnung O1.

Das Mutternelement 10 weist einen Durchgangskanal 18 auf, an dessen radialer Innenseite 20 ein Innengewinde oder inneres Mutterngewinde 22 einer ersten Gangrichtung angeordnet ist.

Zudem weist das Mutternelement 10 in der dargestellten Ausführungsform eine in axialer Richtung vorstehende Nase 24 auf. In der dargestellten Ausführungsform ist die Nase 24 an einem der zwei Raststege 16 angeordnet. Alternativ hierzu kann die Nase 24 auch an dem Haltekragen 14 angeordnet werden.

Die Nase 24 stellt in Verbindung mit der Hohlschraube 40 ein Transportsicherung bereit, die ein unbeabsichtigtes Herausschrauben oder Lösen der Hohlschraube 40 aus dem Mutternelement 10 beispielsweise während eines Transports verhindert, was später erläutert wird.

Neben der Bereitstellung der Transportsicherung hat die Nase 24 den zusätzlichen Effekt, dass sie in Verbindung mit der Hohlschraube 40 ein Verkontern zwischen Hohlschraube 40 und Mutternelement 10 verhindert. Dies ist in der umfänglichen Erstreckung der Nase 24 begründet und wird ebenfalls später bei der Diskussion der Hohlschraube 40 erläutert.

Ergänzend zu dieser durch die Nase 24 gebildeten ersten Verkontersicherung weist das Mutternelement 10 eine zweite Verkontersicherung auf. Diese ist durch ein abruptes Ende 26 des Mutterngewindes 22 gebildet. Das abrupte Ende 26 ist benachbart zu dem axialen Ende des Mutternelements 10 vorhanden, das den Haltekragen 14 aufweist. Somit läuft das Mutterngewinde 22 des Mutternelements 10 benachbart zu einem ersten axialen Ende des Mutternelements 10 nicht stetig aus.

Die Hohlschraube 40 hat einen hohlzylindrischen Schaft 42 mit einem ersten 62 und einem zweiten axialen Ende 64. Am ersten axialen Ende 62 des Schafts 42 ist ein Kopf 44 mit einem Antriebsmerkmal 46, insbesondere ein Sechskant, und einer schaftzugewandten Anlagefläche 48 vorgesehen.

Der hohlzylindrische Schaft 42 weist eine radiale Außenseite 50 mit einem Verstellgewinde 52 auf. Das Verstellgewinde 52 passt mit dem Mutterngewinde 22 des Mutternelements 10 zusammen und ist somit ein Verstellgewinde 52 erster Gangrichtung. Besonders vorteilhaft weist das Verstellgewinde 52 ebenfalls ein abruptes Ende 78 auf, das gerade in Verbindung mit dem abrupten Ende 26 des Mutterngewindes 22 eine effektive zweite Verkontersicherung zwischen Hohlschraube 40 und Mutternelement 10 bereitstellt. Aus diesem Grund ist das abrupte Ende 78 des Verstellgewindes 52 benachbart zum ersten axialen Ende 62 vorgesehen.

Der hohlzylindrische Schaft 42 hat einen beidseitig offenen inneren Kanal 54, der im axialen Schnittbild der Figur 3 zu erkennen ist. An einer radialen Innenseite des Kanals 54 ist ein Befestigungsgewinde 56 einer der ersten Gangrichtung entgegengesetzten zweiten Gangrichtung angeordnet. Der Bereich mit dem Befestigungsgewinde 56 wird auch als erster Bereich oder Befestigungsbereich 58 bezeichnet. Dieser weist einen ersten Innendurchmesser auf, der zu der entsprechenden Befestigungsschraube 80 passt.

In der in Figur 3 gezeigten Ausgestaltung schließt sich in axialer Richtung an den Befestigungsbereich 58 ein zweiter Bereich 60 mit einem größeren Innendurchmesser an. Dieser zweite Bereich 60 ist am zweiten axialen Ende 64 vorgesehen und gewindelos ausgebildet.

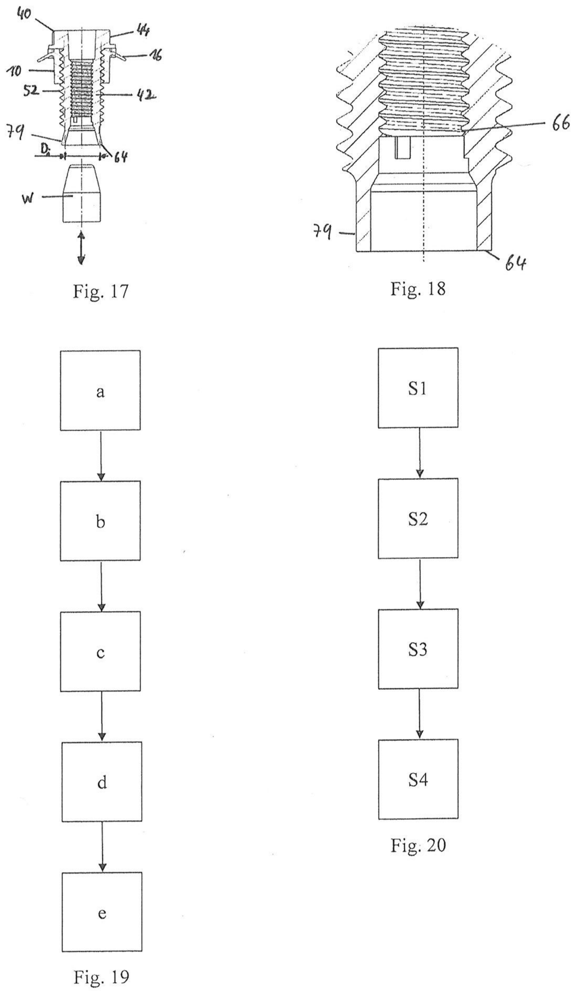

An dem zweiten axialen Ende 64 der Hohlschraube 40, welches dem Kopf 44 gegenüberliegt, ist in einer besonders bevorzugten Ausgestaltung, wie sie in den Figuren 17 und 18 gezeigt ist, ein Demontageschutz 79 der Hohlschraube 40 angeordnet. Aus Übersichtlichkeitsgründen ist die Nase 24 nicht dargestellt.

Der Demontageschutz 79 besteht beispielsweise aus zwei Axialstegen und wird durch eine thermische Aufweitung am zweiten axialen Ende 64 der Hohlschraube 40 realisiert, so dass die radiale Ausdehnung am zweiten axialen Ende 64 einen Innendurchmesser Dᵢ des Mutternelements 10 übersteigt. Anstelle der Axialstege ist auch eine umlaufende Wand bevorzugt. Die thermische Aufweitung erfolgt vorzugsweise durch Zufuhr von Wärme oder Ultraschall mittels eines Werkzeugs W. Nach der Aufweitung lässt sich die Hohlschraube 40 nicht mehr zerstörungsfrei aus dem Mutternelement 10 entfernen. Bezüglich dieser und weiterer Ausgestaltungen des Demontageschutzes wird auf die ebenfalls heute eingereichte deutsche Patentanmeldung DE 10 2024 132 374.4 verwiesen.

Nun wieder auf den Befestigungsbereich 58 bezugnehmend, der das Befestigungsgewinde 56 umfasst, weist dieser weiterhin einen Mitschleppabschnitt 66 mit einem Mitschleppmittel auf. Somit handelt es sich um ein in die Hohlschraube 40 integriertes Mitschleppmittel. Ein separater Mitschlepper bzw. ein eigenständiges Mitschleppelement wie es aus dem Stand der Technik bekannt ist, liegt daher nicht vor.

Der Mitschleppabschnitt 66 und somit das Mitschleppmittel sind benachbart zum zweiten axialen Ende 64 der Hohlschraube 40 angeordnet. Da das erste axiale Ende 62 der Hohlschraube 40 den Kopf 44 aufweist, liegen der Mitschleppabschnitt 66 und das Mitschleppmittel entfernt vom Kopf vor. Wie später erläutert wird, wird bei Verwendung der Toleranzausgleichsanordnung 1 die Befestigungsschraube 80 vom ersten axialen Ende 62 her in das Befestigungsgewinde 56 eingeschraubt. Somit gelangt die Befestigungsschraube 80 erst gegen Ende des Einschraubvorgangs in das Befestigungsgewinde 56 der Hohlschraube 40 mit dem Mitschleppabschnitt 66 und dem Mitschleppmittel in Eingriff.

Das Mitschleppmittel stellt ein Mitschleppmoment bereit. Dieses ist vorzugsweise so dimensioniert, dass es größer ist als ein Losdrehmoment zwischen Verstellgewinde 52 und Mutterngewinde 22 des Mutternelements 10. Im Vergleich zum Stand der Technik mit einem integrierten Mitschleppelement führt das durch das Mitschleppmittel bereitgestellte Mitschleppmoment jedoch nicht zu einem übermäßigen Kraftanstieg, um die Mitschleppverbindung zu lösen und die Befestigungsschraube 80 weiter in die Hohlschraube 40 einzudrehen. Dies wird besonders durch die bevorzugte Größenordnung des Mitschleppmoments verdeutlicht, die ≤ 0,2 Nm beträgt, vorzugweise ≤ 0,1 Nm.

In der dargestellten Ausführungsform ist das Mitschleppmittel benachbart zum zweiten axialen Ende 64 der Hohlschraube 40 in einem Bereich ≤ 360° des Verlaufs des Befestigungsgewindes 56 beginnend am oder benachbart zum zweiten axialen Ende 64 bereitgestellt. Hierbei handelt es sich somit um den Mitschleppabschnitt 66. Wie insbesondere anhand von Figur 3 erkennbar ist, bezieht sich die Formulierung benachbart zum oder am zweiten axialen Ende 64 auf den Befestigungsbereich 58 mit dem Befestigungsgewinde 56. Der zweite Bereich 60 mit dem größeren Innendurchmesser spielt für diese Betrachtung daher keine Rolle und wird außer Acht gelassen. Hierdurch wird verdeutlicht, dass das Mitschleppmittel in Einschraubrichtung der Befestigungsschraube 80 am Ende des Befestigungsgewindes 56 vorliegt.

Zudem ergibt sich über das Merkmal des Verlaufs von ≤ 360° des Befestigungsgewindes 56 in Abhängigkeit von der Gewindesteigung die maximale axiale Erstreckung des Mitschleppabschnitts 66, in dem das Mitschleppmittel vorliegt. Wenn beispielsweise eine Gewindesteigung von 1,75 mm vorliegt, dann beträgt die axiale Erstreckung des Mitschleppabschnitts 66 entsprechend maximal 1,75 mm.

Das Mitschleppmittel im Mitschleppabschnitt 66 kann dadurch bereitgestellt werden, dass sich eine Tiefe des Befestigungsgewindes 56 verringert und/oder das Befestigungsgewinde 56 zumindest teilweise unterbrochen ausgebildet ist und/oder die radiale Innenseite der Hohlschraube 40 benachbart zum zweiten axialen Ende 64 umfänglich und in axialer Richtung teilweise oder vollständig eben ausgebildet ist. Da, wie oben erläutert, der zweite Bereich 60 mit dem größeren Innendurchmesser nicht betrachtet wird, bezieht sich die ebene Ausgestaltung der radialen Innenseite auf den Befestigungsbereich 58. Die teilweise umfängliche und in axialer Richtung ebene Ausgestaltung ist in den Figuren 17 und 18 dargestellt. Dabei ist die ebene Ausgestaltung insbesondere an dem dem zweiten axialen Ende 64 zugewandten Ende des Befestigungsbereichs 58 vorhanden und erstreckt sich in axialer Richtung nicht weiter als eine Umdrehung des Gewindeverlaufs des Befestigungsgewindes 56.

Im Ergebnis ist das Befestigungsgewinde 56 nicht vollständig ausgeformt. Vielmehr muss die Befestigungsschraube 80 einen Teil des Befestigungsgewindes 56 selbst furchen oder schneiden, bevor ein vorderes Ende der Befestigungsschraube 80 den Befestigungsbereich 58 verlässt. Die unterschiedlichen bevorzugten Ausgestaltungen des Mitschleppmittels realisieren dabei alle eine effektive Mitschleppverbindung zwischen Hohlschraube 40 und Befestigungsschraube 80. Mit den unterschiedlichen Ausgestaltungen kann jedoch das Mitschleppmoment insbesondere auf die verwendeten Materialen abgestimmt werden.

Nachdem zunächst die Ausgestaltung der Hohlschraube 40 im Inneren diskutiert wurde, wird nachfolgend die Ausgestaltung der Außenseite betrachtet.

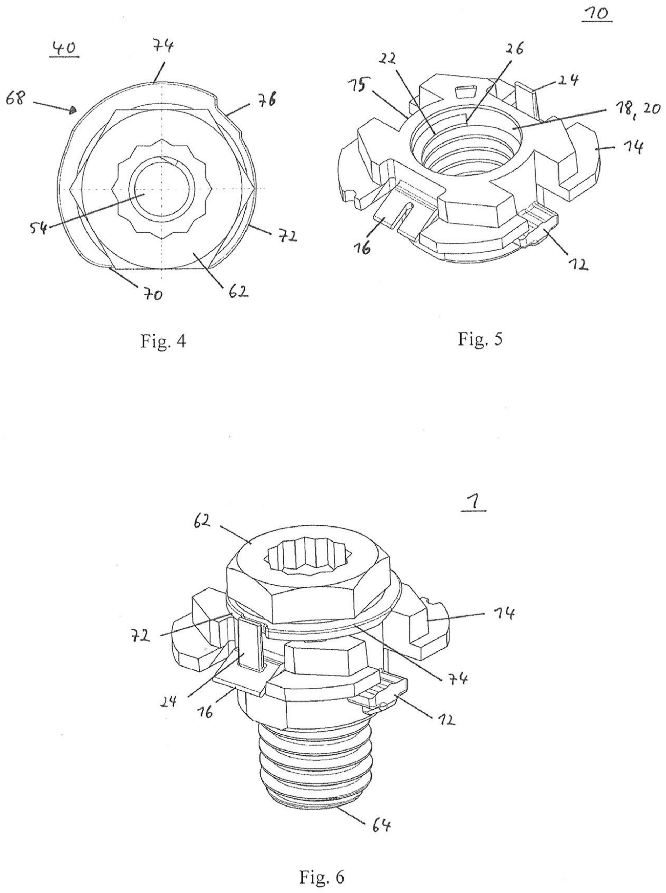

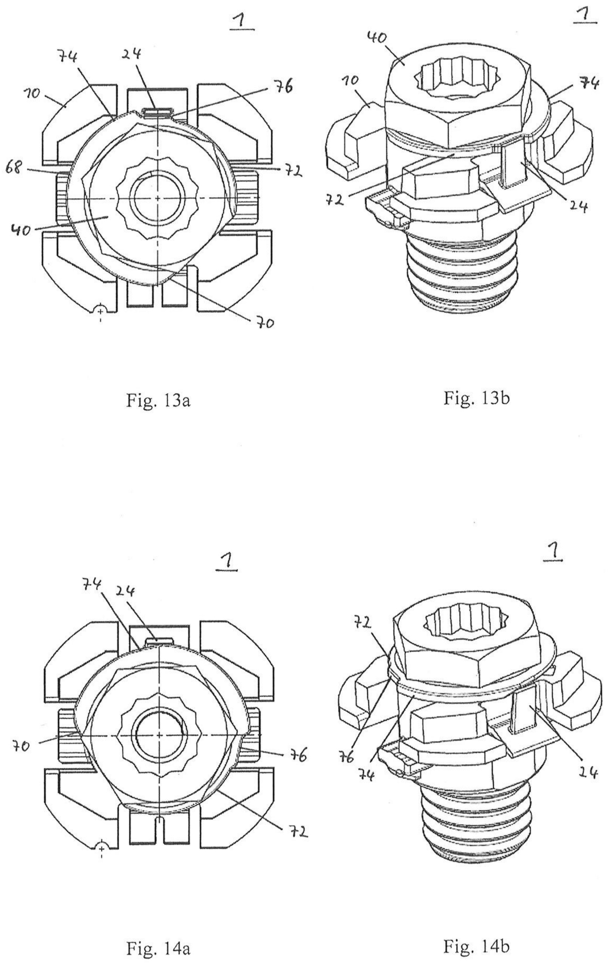

So weist die schaftzugewandte Anlagefläche 48 an der radialen Außenseite eine Transportsicherungskontur 68 auf. Die Transportsicherungskontur 68 ist dabei so ausgestaltet, dass sie in radialer Richtung in einem ersten Umfangsteilbereich 70 nicht über den Kopf 44 hervorsteht, in einem zweiten Umfangsteilbereich 72 nicht über einen die Kopfform umhüllenden Kreis hervorsteht und in einem dritten Umfangsteilbereich 74 über den umhüllenden Kreis hervorsteht. Der erste 70, der zweite 72 und der dritte Umfangsteilbereich 74 sind in umfänglicher Richtung hintereinander angeordnet. Zwischen dem zweiten 72 und dem dritten Umfangsteilbereich 74 befindet sich ein Übergangsbereich 76. Der Übergangsbereich 76 ist in umfänglich radialer Richtung konstant ausgebildet und geht jeweils über eine Schräge in den zweiten 72 und dritten Umfangsteilbereich 74 über. In der dargestellten Ausführungsform liegt die Nase 24 im vollständig eingeschraubten Zustand der Hohlschraube 40 in das Mutternelement 10 an dem Übergangsbereich 76 an, ist aber nicht radial ausgelenkt. Dieser Zustand ist in den Figuren 6, 13a und 13 b gezeigt.

Die Transportsicherungskontur 68 stellt in Verbindung mit der Nase 24 des Mutternelements 10 eine Transportsicherung bereit, so dass während eines Transports der Toleranzausgleichsanordnung 1 ein unbeabsichtigtes Ausschrauben der Hohlschraube 40 aus dem Mutternelement 10 verhindert ist. Wie oben in Verbindung mit der Nase 24 erläutert, stellt diese Ausgestaltung zudem eine erste Verkontersicherung zwischen der Hohlschraube 40 und dem Mutternelement 10 bereit. Dies ist in der Breite der Nase 24, d.h. ihrer Erstreckung in umfänglicher Richtung, und der daraus resultierenden Anlagefläche an der Transportsicherungskontur 68 begründet.

Der oben verwendete Begriff "in radialer Richtung ausgelenkt" bezeichnet dabei den Zustand, in dem die Nase 24 im Vergleich zu ihrem anfänglichen Zustand aufgrund der Transportsicherungskontur 68 radial weiter nach außen gedrückt wird. Wird beispielsweise ausgehend von dem in den Figuren 6, 13a und 13b gezeigten Ausgangszustand die Hohlschraube 40 aus dem Mutternelement 10 herausgeschraubt, gelangt die Nase 24 über die Schräge mit dem dritten Umfangsteilbereich 74 in Eingriff. Hierdurch wird die Nase 24 radial nach außen ausgelenkt oder gedrückt, wodurch das Herausschrauben der Hohlschraube 40 erschwert ist. Dies ist in den Figuren 14a und 14b gezeigt.

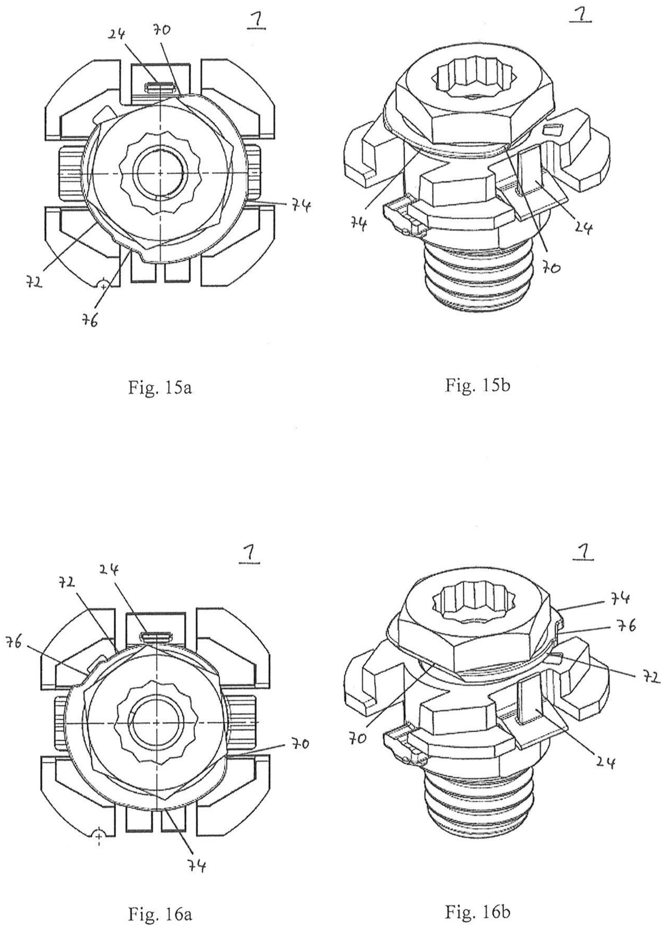

Im weiteren Verlauf des Herausschraubens kommt die Nase 24 in den Bereich des ersten Umfangsteilbereichs 70, was in den Figuren 15a und 15b gezeigt ist. Dieser ist jedoch so dimensioniert, dass er die Nase 24 nicht mehr radial nach außen drückt. Somit kann die Nase 24 in ihren ursprünglichen Zustand zurückkehren.

Ein weiteres Ausschrauben der Hohlschraube 40 führt aufgrund der Gewindesteigung und der dazu passenden Dimensionierung der Nase 24 in axialer Richtung nicht mehr zu einem Eingriff zwischen Nase 24 und Transportsicherungskontur 68. Dies wird bereits anhand der Darstellung in den Figuren 16a und 16b deutlich. Dementsprechend ist die Erstreckung der Nase 24 in axialer Richtung vorzugsweise so gewählt, dass spätestens nach einer vollen Umdrehung der Hohlschraube 40 die Transportsicherungskontur 68 nicht mehr mit der Nase 24 in Eingriff gelangen kann.

Weiterhin weist das Verstellgewinde 52 der Hohlschraube 40 benachbart zum ersten axialen Ende 62 der Hohlschraube 40 ein abruptes Ende 78 auf. Somit läuft das Verstellgewinde 52 benachbart zum ersten axialen Ende 62 der Hohlschraube 40 nicht stetig aus. Dies führt, gerade in Verbindung mit dem abrupten Ende 26 des Mutterngewindes 22 des Mutternelements 10 zu einer zweiten Verkontersicherung. Diese zweite Verkontersicherung stellt ein Widerstandsmoment bereit, welches vorzugsweise größer als das Mitschleppmoment ist. Mittels der zweiten Verkontersicherung wird somit eine zusätzliche Sicherung gegen Verkontern bereitgestellt. Zudem bewirkt gerade die zweite Verkontersicherung, dass im vollständig eingeschraubten Zustand der Hohlschraube 40 in das Mutternelement 10 ein Abstand zwischen der Anlagefläche 48 und einer Oberseite des Haltekragens 14 des Mutternelements 10 vorhanden ist. Hierzu wird beispielhaft auf Figur 7 verwiesen.

Die Vorteile der Toleranzausgleichsanordnung 1 sind somit, dass sie aufgrund des Mutternelements 10 einfach und schnell im ersten Bauteil A befestigt werden kann. Ein separater Mitschlepper ist zudem nicht erforderlich, was die Komplexität der Toleranzausgleichsanordnung 1 verringert. Zudem ist das Mitschleppmoment so dimensioniert, dass kein wesentlich erhöhter Kraftaufwand zum Lösen der Mitschleppverbindung erforderlich ist, was die Verwendung weiter vereinfacht.

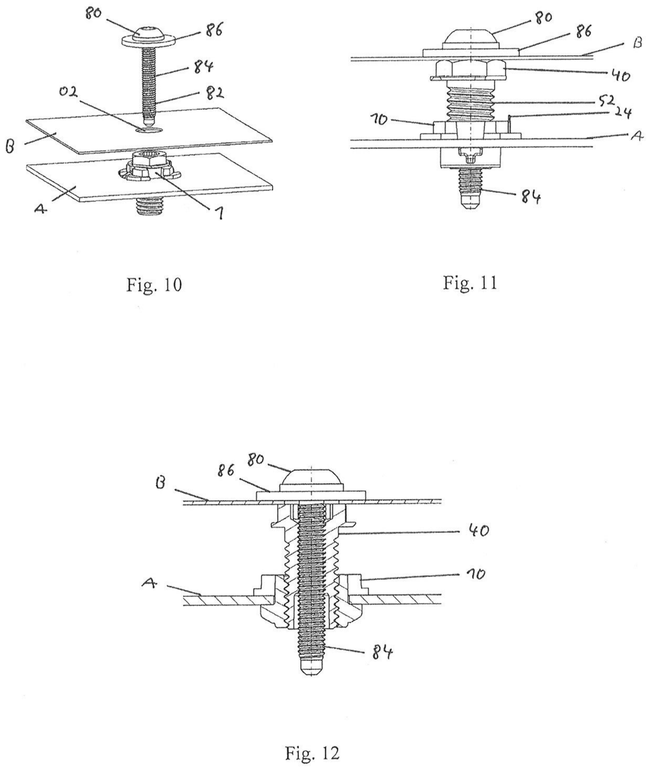

Die Figuren 10 bis 12 illustrieren das Verbinden des ersten A und des zweiten Bauteils B bei gleichzeitigem Ausgleich axialer Toleranzen zwischen den Bauteilen A, B mithilfe der Toleranzausgleichsanordnung 1. In einem ersten bevorzugten Schritt A wird das Mutternelement 10 mit der darin vorinstallierten Hohlschraube 40 in der Schlüssellochgeometrie 90 des ersten Bauteils A befestigt. In dieser Hinsicht wird auf die obigen Ausführungen sowie Figur 9 verwiesen.

Nachfolgend wird das zweite Bauteil B mit einer Bauteilöffnung O2 so angeordnet, dass die Bauteilöffnung O2 auf den Kanal 54 der Hohlschraube 40 im Mutternelement 10 ausgerichtet ist.

Ausgerichtet bedeutet in diesem Zusammenhang bevorzugt, dass ein Mittelpunkt der Bauteilöffnung O2 auf der Mittellängsachse des Kanals 54 liegt oder benachbart dazu. Dies zeigt beispielhaft Figur 10.

Dann wird die Befestigungsschraube 80 durch die Bauteilöffnung O2 des zweiten Bauteils B in den Kanal 54 der Hohlschraube 40 gesteckt und in der zweiten Gangrichtung gedreht. Denn ein Schraubengewinde 82 der Befestigungsschraube 80 weist die gleiche Gangrichtung wie das Befestigungsgewinde 56 innerhalb der Hohlschraube 40 auf.

Da das Befestigungsgewinde 56 und das Schraubengewinde 82 geometrisch zueinander passen, lässt sich die Befestigungsschraube 80 so weit in das Befestigungsgewinde 56 einschrauben, bis ein kopfabgewandte Ende eines Schraubenschafts 84 der Befestigungsschraube 80 den Mitschleppabschnitt 66 erreicht, der einen Reibwiderstand zwischen der drehenden Befestigungsschraube 80 und der Hohlschraube 40 im Vergleich zum Gewindeeingriff zwischen Schraubengewinde 82 und Befestigungsgewinde 56 erhöht (Schritt B).

Basierend auf der zunehmenden Reibung zwischen der Befestigungsschraube 80 und der Hohlschraube 40 wird die Hohlschraube 40 durch die Befestigungsschraube 80 mitgedreht. Da die Befestigungsschraube 80 in der zweiten Gangrichtung die Hohlschraube 40 mitdreht, die Hohlschraube 40 aber mit dem Verstellgewinde 52 in dem Mutterngewinde 22 der ersten Gangrichtung geführt wird, schraubt die Drehung der Befestigungsschraube 80 die Hohlschraube 40 in Richtung zweites Bauteil B aus dem Mutternelement 10 (Schritt C).

Sobald der Kopf 44 der Hohlschraube 40 am zweiten Bauteil B anliegt, überwindet die Drehung der Befestigungsschraube 80 den Mitschleppabschnitt 66 und verschraubt sich fest mit der Hohlschraube 40. Dieser Zustand ist in den Figuren 11 und 12 gezeigt.

Die vorliegende Erfindung umfasst auch die Verbindung der beiden Bauteile A, B mit Hilfe der axialen Toleranzausgleichsanordnung 1. Beispielgebend ist eine derartige Verbindung mit der Ausführungsform der axialen Toleranzausgleichsanordnung 1 in den Figuren 11 und 12 dargestellt.

Nun bezugnehmend auf Figur 19 wird ein Verbindungsverfahren zum Verbinden der beiden Bauteile A, B mithilfe der axialen Toleranzausgleichsanordnung 1 aneinander zusammengefasst.

Zunächst erfolgt ein Befestigen (Schritt a) des Mutternelements 10 mit einer darin vormontierten Hohlschraube 40 in einer ersten Bauteilöffnung O1, vorzugsweise eine bevorzugte Schlüssellochgeometrie 90 des ersten Bauteils A, danach ein Anordnen (Schritt b) der Bauteilöffnung O2 des zweiten Bauteils B gegenüber dem Befestigungsgewinde 56 der Hohlschraube 40 und ein Einschrauben (Schritt c) der Befestigungsschraube 80, die sich durch die Bauteilöffnung O2 erstreckt, in das Befestigungsgewinde 56. Danach erfolgt durch Drehen (Schritt d) der Befestigungsschraube 80 und das dadurch stattfindende Mitdrehen der Hohlschraube 40 ein Verlängern der Toleranzausgleichsanordnung 1 in axialer Richtung, bis die Toleranzausgleichsanordnung 1 mit dem Kopf 42 der Hohlschraube 40 an dem zweiten Bauteil B anliegt. Abschließend wird im Schritt e die Befestigungsschrauben 80 im Befestigungsgewinde der Hohlschraube 40 festgezogen, wenn sich der Kopf 42 der Hohlschraube 40 am zweiten Bauteil B abstützt.

Wie oben bereits erwähnt worden ist, bestehen bevorzugt die Bestandteile der axialen Toleranzausgleichsanordnung 1 aus Kunststoff, im Speziellen das Mutternelement 10 und die Hohlschraube 40. Zudem ist es bevorzugt, den verwendeten Kunststoff für die Herstellung des Mutternelements 10 und der Hohlschraube 40 mit einem Glasfaseranteil (siehe oben) zu versehen, um dessen mechanische Belastbarkeit und Stabilität zu steigern.

Gemäß einer bevorzugten Ausführungsform vorliegender Erfindung werden das Mutternelement 10 und die Hohlschraube 40 mithilfe eines Spritzgussverfahrens hergestellt. Entsprechend lässt sich das Herstellungsverfahren mit den folgenden Schritten zusammenfassen, wie es beispielhaft in Figur 20 gezeigt ist: Bereitstellen (Schritt S1) einer Spritzgussform für das Mutternelement 10 und für die Hohlschraube 40, Spritzgießen (Schritt S2) des Mutternelements 10 und der Hohlschraube 40, Entformen (Schritt S3) des Mutternelements 10 und der Hohlschraube 40 und Vorinstallieren (Schritt S4) der Hohlschraube 40 in dem Mutternelement 10.

Der Schritt des Vorinstallierens (Schritt S4) ist nicht zwingend Bestandteil des Herstellungsverfahrens und kann in Abhängigkeit vom Installationsablauf der axialen Toleranzausgleichsanordnung 1 später erfolgen.

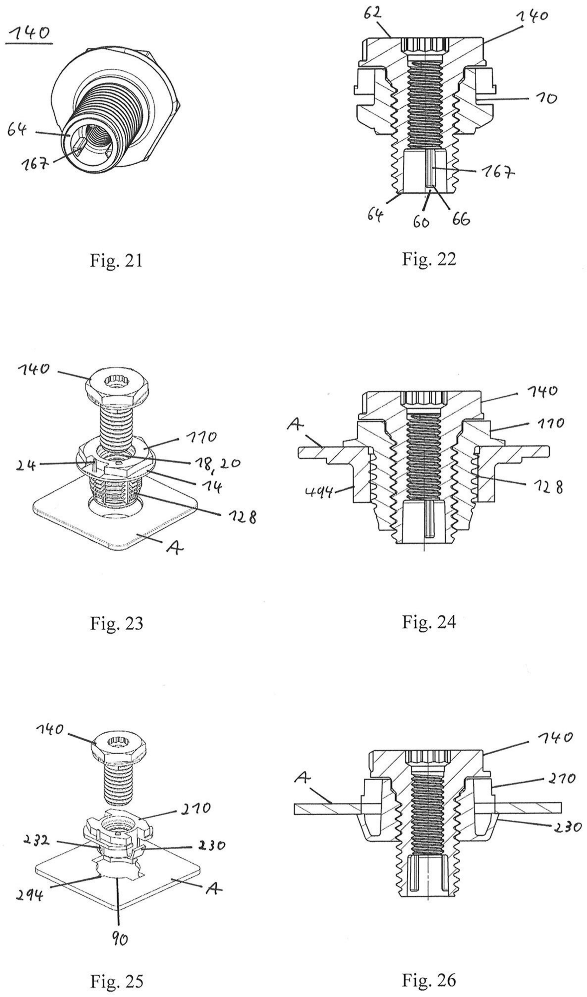

Die Figuren 21 und 22 zeigen eine alternative Ausgestaltung einer Hohlschraube 140. Der grundsätzliche Aufbau der Hohlschraube 140 gleicht dem der Hohlschraube 40, so dass die Hohlschraube 140 ebenfalls ein erstes axiales Ende 62 sowie ein zweites axiales Ende 64 aufweist. Der zweite Bereich 60 befindet sich am bzw. benachbart zum zweiten axialen Ende 64.

Im Unterschied zu der vorherigen Ausgestaltung der Hohlschraube 40 umfasst die Hohlschraube 140 im Mitschleppabschnitt 66 axiale Stege 167. Diese axialen Stege 167 schließen sich an den Bereich mit ausgeformtem Befestigungsgewinde 56 an.

In der dargestellten Ausführungsform sind drei axiale Stege 167 vorgesehen, die umfänglich gleichmäßig voneinander beabstandet sind. Zwischen den axialen Stegen 167 springt die Wand im Befestigungsbereich 58 radial zurück. Mit anderen Worten stehen die axialen Stege 167 in radialer Richtung von der Wand im Befestigungsbereich 58 vor. Der Vorsprung ist in radialer Richtung so bemessen, dass die Befestigungsschraube 80 mit den axialen Stegen 167 in Eingriff gelangt. Da die axialen Stege 167 jedoch eben ausgebildet sind, muss die Befestigungsschraube 80 in die axialen Stege 167 ein Gewinde einbringen. Somit ist die radiale Innenseite bei dieser Ausgestaltung umfänglich und in axialer Richtung teilweise eben ausgebildet. Das Mitschleppmoment kann über die Anzahl und/oder Erstreckung der axialen Stege 167 in Umfangsrichtung an die gewünschte Anwendung angepasst werden.

In der dargestellten Ausgestaltung weisen die axialen Stege 167 zudem im Querschnitt eine Trapezform auf. Dabei ist die längere Grundseite der Trapezform radial außen anordnet, während die kürzere Grundseite radial innen angeordnet ist und den Bereich bereitstellt, mit dem die Befestigungsschraube 80 bei Verwendung in Eingriff gelangt. Somit ist eine Erstreckung in umfängliche Richtung bzw. eine Breite der axialen Stege 167 benachbart zu der Wand größer als in radialer Richtung beabstandet von der Wand.

Die axialen Stege 167 stellen das Mitschleppmittel zum automatischen Mitschleppen der Hohlschraube 140 bereit. Denn erst nach Überwindung des Mitschleppmoments bringt die Befestigungsschraube 80 in die axialen Stege 167 ein Gewinde ein. Darüber hinaus können gerade die trapezförmig ausgebildeten axialen Stege 167 auch als weiteres Antriebsmittel für eine manuelle Verstellung der Hohlschraube 140 dienen. So kann beispielsweise ein entsprechendes Werkzeug vom zweiten axialen Ende 64 her in die Hohlschraube 140 eingreifen, um diese zu drehen.

Nun bezugnehmend auf die Figuren 23 und 24 wird eine alternativ bevorzugte Ausgestaltung der radial äußeren Befestigungsstruktur eines Mutternelements 110 diskutiert. Das Mutternelement 110 unterscheidet sich von dem Mutternelement 10 nur durch diese geänderte radial äußere Befestigungsstruktur.

Bei dem Mutternelement 110 wird die radial äußere Befestigungsstruktur durch ein Außengewinde 128 bereitgestellt. In diesem Zusammenhang ist es besonders bevorzugt, dass es sich um ein gewindeformendes oder gewindefurchendes Außengewinde 128 handelt. Denn auf diese Weise ist eine besonders verlässliche Verbindung insbesondere mit einem ersten Bauteil A aus einem Kunststoffmaterial herstellbar.

Wie im Vergleich zu den Figuren 11 und 12 erkennbar ist, ist bei der Befestigung des so gestalteten Mutternelements 110 im ersten Bauteil A ein Kragen oder ein Wandbereich 494 benachbart zur Öffnung erforderlich. Dies gilt insbesondere bei einem dünnwandigen ersten Bauteil A, da insbesondere auf diese Weise eine ausreichend große Eingriffsfläche zwischen Außengewinde 128 und erstem Bauteil A bereitstellbar ist.

Die Figuren 25 und 26 zeigen ein Mutternelement 210 mit einer weiteren alternativen Ausgestaltung der radial äußere Befestigungsstruktur. Auch dieses Mutternelement 210 unterscheidet sich von der Ausführungsform des Mutternelements 10 nur durch die geänderte radial äußere Befestigungsstruktur.

In der vorliegenden Ausführungsform wird diese radial äußere Befestigungsstruktur durch eine Raststruktur mit radial federnden Rastnasen 230 gebildet. Dabei sind zwei einander gegenüberliegend angeordnete Rastnasen 230 vorgesehen. Wie insbesondere anhand von Figur 25 erkennbar ist, kann das so ausgestaltete Mutternelement 210 ebenfalls in eine Schlüssellochgeometrie 90 im ersten Bauteil A eingesetzt werden.

In der dargestellten Ausführungsform umfasst das Mutternelement 210 zudem zwei axial verlaufende starre Stege 232 an der radialen Außenseite, um ein Drehen des Mutternelements 210 in dem ersten Bauteil A bei Verwendung zu verhindern. Die zwei starren Stege 232 wirken dazu jeweils mit einer entsprechenden Aussparung 294 in der Schlüssellochgeometrie 90 zusammen.

Die Rastnasen 230 und die starren Stege 232 sind in umfänglicher Richtung wechselweise angeordnet. Somit sind zwei Rastnasen 230 und zwei starre Stege 232 jeweils gegenüberliegend voneinander angeordnet, während zwischen einer Rastnase 230 und dem benachbarten starren Steg 232 ein Winkel von 90° eingeschlossen ist.

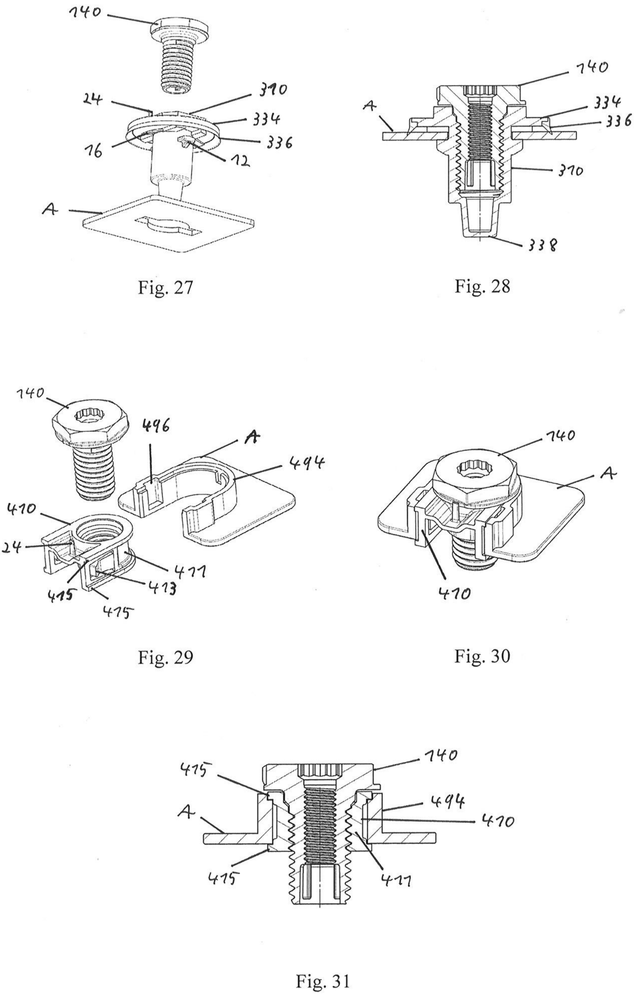

Ein Mutternelement 310 mit einem Flansch 334 und einer daran angeordneten Dichtlippe 336 ist in den Figuren 27 und 28 gezeigt. Der grundsätzliche Aufbau des Mutternelements 310 insbesondere im Hinblick auf die radial äußere Befestigungsstruktur entspricht dem Aufbau des Mutternelements 10.

Der Flansch 334 befindet sich in axialer Richtung oberhalb der radial äußeren Befestigungsstruktur. Die Dichtlippe 336 erstreckt sich umfänglich ununterbrochen vom äußeren Ende des Flanschs 334 in axialer Richtung nach unten, d.h. in Richtung der radial äußeren Befestigungsstruktur. Somit liegt bei Verwendung die Dichtlippe 336 auf einer Oberfläche des ersten Bauteils A um die Bauteilöffnung O1 herum auf und verhindert ein Eindringen von Medien durch die Bauteilöffnung O1. Um zusätzlich sicherzustellen, dass kein Medium durch die Bauteilöffnung O1 und insbesondere durch die Hohlschraube 140 von der einen Bauteilseite zu der anderen Bauteilseite gelangen kann, ist das Mutternelement 310 vorzugsweise einseitig geschlossen ausgebildet. Dies wird durch das geschlossene Ende 338 dargestellt.

Die in Verbindung mit dem Mutternelement 310 diskutierte Abdichtungsfunktion kann analog auf die anderen Mutternelement 10, 110 und 210 sowie das nachfolgend diskutierte Mutternelement 410 übertragen werden.

Abschließend bezugnehmend auf die Figuren 29-31 wird eine weitere Ausgestaltung eines Muttemelements 410 diskutiert. Dieses ist besonders angepasst auf den Fall, bei dem sich die Bauteilöffnung O1 des ersten Bauteils A an einem Rand des ersten Bauteils A befindet.

Die im Rahmen des Beispiels gezeigte Bauteilöffnung O1 liegt in Form einer U-förmigen Aussparung vor. Die radial äußere Befestigungsstruktur des Mutternelements 410 wird daher mittels seitlicher Rastnasen 413 bereitgestellt. Hierzu weist das Mutternelement 410 einen komplementär zur U-förmigen Aussparung geformten U-förmigen Körper 411 auf, wobei an den radialen Außenseiten des jeweiligen Schenkels der U-Form eine Rastnase 413 vorgesehen ist. Jede der Rastnasen 413 wirkt mit einer entsprechenden Aussparung 496 in einem Wandbereich 494 der Bauteilöffnung O1 im ersten Bauteil A zusammen. Denn auch hier ist es erforderlich, wie bei dem Außengewinde 128 als radial äußere Befestigungsstruktur, bei einem dünnwandigen ersten Bauteil A eine vergrößerte Eingriffsfläche zur sicheren Befestigung des Mutternelements 410 bereitzustellen.

Das Einsetzen des Mutternelements 410 in die Bauteilöffnung O1 erfolgt nicht in axialer Richtung, sondern von der Seite. Um eine Bewegung des Mutternkörpers 411 in axialer Richtung bei und nach dem Einsetzen zu verhindern, weist der U-förmigen Mutternkörper 411 Führungsvorsprünge 415 auf. Diese befinden sich jeweils an den axialen Enden der U-Form, d.h. oben und unten, und wirken vorzugsweise mit entsprechenden Aussparungen im Wandbereich 494 zusammen, was insbesondere aus den Figuren 29 und 31 ersichtlich ist.

### 6. Bezugszeichenliste

- 1: axiale Toleranzausgleichsanordnung

- 10: Mutternelement
- 12: Bajonettsteg
- 14: Haltekragen
- 15: Eingriff für Werkzeug
- 16: Raststeg
- 18: Durchgangskanal im Mutternelement
- 20: radiale Innenseite im Durchgangskanal 18
- 22: Mutterngewinde einer ersten Gangrichtung
- 24: Nase
- 26: abruptes Ende des Mutterngewindes 22

- 40: Hohlschraube
- 42: hohlzylindrischer Schaft
- 44: Kopf
- 46: Antriebsmerkmal
- 48: Anlagefläche
- 50: radiale Außenseite des Schafts 42
- 52: Verstellgewinde erster Gangrichtung
- 54: Kanal
- 56: Befestigungsgewinde zweiter Gangrichtung
- 58: Befestigungsbereich
- 60: zweiter Bereich
- 62: erstes axiales Ende
- 64: zweites axiales Ende
- 66: Mitschleppabschnitt
- 68: Transportsicherungskontur
- 70: erster Umfangsteilbereich
- 72: zweiter Umfangsteilbereich
- 74: dritter Umfangsteilbereich
- 76: Übergangsbereich
- 78: abruptes Ende des Verstellgewindes 52
- 79: Demontageschutz

- 80: Befestigungsschraube
- 82: Schraubengewinde
- 84: Schraubenschaft
- 86: Scheibe

- 90: Schlüssellochgeometrie
- 92: Ausschnitt

- 110: Mutternelement (2. Ausführungsform)
- 128: Außengewinde
- 140: Hohlschraube (2. Ausführungsform)
- 167: axiale Stege

- 210: Mutternelement (3. Ausführungsform)
- 230: Rastnase
- 232: starrer Steg
- 294: Aussparung

- 310: Mutternelement (4. Ausführungsform)
- 334: Flansch
- 336: Dichtlippe
- 338: geschlossenes Ende
- 410: Mutternelement (5. Ausführungsform)
- 411: U-förmiger Mutternkörper
- 413: Rastnase
- 415: Führungsvorsprung
- 494: Wandbereich
- 496: Aussparung im Wandbereich 494

- A: erstes Bauteil
- B: zweites Bauteil
- Dᵢ: Innendurchmesser des Mutternelements 10
- O1: Bauteilöffnung im ersten Bauteil
- O2: Bauteilöffnung im zweiten Bauteil
- R_{E}: Einsetzrichtung
- W: Werkzeug

## Patentansprüche

1. Eine axiale Toleranzausgleichsanordnung (1) zum selbsttätigen Ausgleich von Toleranzen zwischen einem ersten (A) und einem zweiten Bauteil (B), welche die folgenden Merkmale aufweist:
a. ein Mutternelement (10), vorzugsweise ein ringförmiges Mutternelement (10), mit einer radial äußeren Befestigungsstruktur (12), insbesondere einer Bajonettstruktur, die in einer Bauteilöffnung (O1), insbesondere einer Schlüssellochgeometrie (90), des ersten Bauteils (A) befestigbar ist, und einem inneren Mutterngewinde (22) einer ersten Gangrichtung,
b. eine Hohlschraube (40) mit einem Kopf (44) an einem ersten axialen Ende (62) der Hohlschraube (40) und einem hohlzylindrischen Schaft (42), der an einer radialen Außenseite ein Verstellgewinde (52) passend zum Mutterngewinde (22) und an einer radialen Innenseite ein Befestigungsgewinde (56) mit einer der ersten entgegengesetzten zweiten Gangrichtung aufweist, welches mit
c. einer Befestigungsschraube (80) zweiter Gangrichtung zusammenwirkt, sodass das erste (A) und das zweite Bauteil (B) über die Toleranzausgleichsanordnung (1) aneinander befestigbar sind, wobei
d. das Befestigungsgewinde (56), vorzugsweise benachbart zu einem zweiten axialen Ende (64) der Hohlschraube (40), ein Mitschleppmittel aufweist, so dass die Befestigungsschraube (80) mit der Hohlschraube (40) über das Mitschleppmittel durch eine lösbare Mitschleppverbindung verbindbar ist, wobei ein Mitschleppmoment vorzugsweise ≤ 0,2 Nm beträgt, besonders bevorzugt ≤ 0,1 Nm, so dass bei einem Drehen der Befestigungsschraube (80) die Hohlschraube (40) mitdrehbar und in Anlage mit dem zweiten Bauteil (B) bewegbar ist und die Befestigungsschraube (80) nach Überwindung des Mitschleppmoments und Lösen der Mitschleppverbindung weiter in die Hohlschraube (40) einschraubbar ist.

2. Die Toleranzausgleichsanordnung (1) gemäß Patentanspruch 1, wobei das Mitschleppmittel benachbart zum zweiten axialen Ende (64) der Hohlschraube (40), insbesondere in einem Bereich ≤ 360° des Verlaufs des Befestigungsgewindes (56) beginnend am oder benachbart zum zweiten axialen Ende (64), dadurch bereitgestellt ist, dass
a) sich eine Tiefe des Befestigungsgewindes (56) verringert, und/oder
b) das Befestigungsgewinde (56) zumindest teilweise unterbrochen ausgebildet ist und/oder
c) die radiale Innenseite der Hohlschraube (40) benachbart zum zweiten axialen Ende (64) umfänglich und in axialer Richtung teilweise oder vollständig eben ausgebildet ist.

3. Die Toleranzausgleichsanordnung (1) gemäß einem der vorhergehenden Patentansprüche, die weiterhin eine Transportsicherung aufweist, so dass während eines Transports der Toleranzausgleichsanordnung (1) ein unbeabsichtigtes Ausschrauben der Hohlschraube (40) aus dem Mutternelement (10) verhindert ist.

4. Die Toleranzausgleichsanordnung (1) gemäß Patentanspruch 3, wobei die Transportsicherung zusätzlich eine erste Verkontersicherung zwischen der Hohlschraube (40) und dem Mutternelement (10) bereitstellt.

5. Die Toleranzausgleichsanordnung (1) gemäß Patentanspruch 3 oder 4, wobei das Mutternelement (10) eine in axialer Richtung vorstehende Nase (24) aufweist, die in Verbindung mit einer Transportsicherungskontur (68) an einer radialen Außenseite einer schaftzugewandten Anlagefläche (48) an dem Kopf (44) der Hohlschraube (40) die Transportsicherung bildet.

6. Die Toleranzausgleichsanordnung (1) gemäß Patentanspruch 5, wobei die Transportsicherungskontur (68) in radialer Richtung in einem ersten Umfangsteilbereich (70) nicht über den Kopf (44) hervorsteht, in einem zweiten Umfangsteilbereich (72) nicht über einen die Kopfform umhüllenden Kreis hervorsteht und in einem dritten Umfangsteilbereich (74) über den umhüllenden Kreis hervorsteht.

7. Die Toleranzausgleichsanordnung (1) gemäß einem der Patentansprüche 4 bis 6, wobei weiterhin eine zweite Verkontersicherung zwischen Hohlschraube (40) und Mutternelement (10) bereitgestellt ist.

8. Die Toleranzausgleichsanordnung (1) gemäß Patentanspruch 7, wobei die zweite Verkontersicherung dadurch gebildet ist, dass
a) das Verstellgewinde (52) benachbart zum ersten axialen Ende (62) der Hohlschraube (40) nicht stetig ausläuft und/oder
b) das Mutterngewinde (22) des Mutternelements (10) benachbart zu einem ersten axialen Ende des Mutternelements (10) nicht stetig ausläuft.

9. Die Toleranzausgleichsanordnung (1) gemäß einem der vorhergehenden Patentansprüche, in der das ringförmige Mutternelement (10) und die Hohlschraube (40) aus Kunststoff bestehen und vorzugsweise einen Glasfaseranteil im Bereich von 25-65%, vorzugsweise 45-55%, bevorzugt 50%, aufweisen.

10. Eine Verbindung eines ersten Bauteils (A) und eines dazu beabstandeten zweiten Bauteils (B) mit der Toleranzausgleichsanordnung (1) gemäß einem der vorhergehenden Patentansprüche und einer Befestigungsschraube (80).

11. Die Verbindung gemäß Patentanspruch 10, in der das erste Bauteil (A) eine Schlüssellochgeometrie (90) aufweist, in der das Mutternelement (10) angeordnet ist.

12. Ein Verbindungsverfahren eines ersten Bauteils (A) mit einer Schlüssellochgeometrie (90) mit einem dazu beabstandeten zweiten Bauteil (B) mit einer Bauteilöffnung (O2) mit einer Toleranzausgleichsanordnung (1) gemäß einem der Patentansprüche 1 bis 9, das die folgenden Schritte aufweist:
a. Befestigen (a) des Mutternelements (10) mit der darin vormontierten Hohlschraube (40) in der Öffnung (O1), vorzugsweise eine Schlüssellochgeometrie (90), des ersten Bauteils (A),
b. Anordnen (b) der Bauteilöffnung (O2) des zweiten Bauteils (B) gegenüber dem Befestigungsgewinde (56) der Hohlschraube (40) und Einschrauben (c) einer Befestigungsschraube (80), die sich durch die Bauteilöffnung (O2) erstreckt, in das Befestigungsgewinde (56),
c. Drehen (d) der Befestigungsschraube (80) und dadurch Mitdrehen der Hohlschraube (40), bis diese an dem zweiten Bauteil (B) anliegt und
d. Festziehen (e) der Befestigungsschraube (80) im Befestigungsgewinde (56), wenn sich der Kopf (44) der Hohlschraube am zweiten Bauteil (B) abstützt.

13. Ein Herstellungsverfahren der Toleranzausgleichsanordnung (1) gemäß einem der Patentansprüche 1 bis 9, das die folgenden Schritte aufweist:
a. Bereitstellen (S1) einer Spritzgussform für das Mutternelement (10) und für die Hohlschraube (40),
b. Spritzgießen (S2) des Mutternelements (10) und der Hohlschraube (40),
c. Entformen (S3) des Mutternelements (10) und der Hohlschraube (40), und
d. vorzugsweise Vorinstallieren (S4) der Hohlschraube (40) in dem Mutternelement (10).
